(19) Europäisches Patentamt
European Patent Office
Office européen des brevets

(11) **EP 2 085 582 A1**

(12) **EUROPEAN PATENT APPLICATION**
published in accordance with Art. 153(4) EPC

(43) Date of publication:
**05.08.2009 Bulletin 2009/32**

(51) Int Cl.:
*F01N 3/02* (2006.01)       *B01D 53/94* (2006.01)
*B03C 3/02* (2006.01)       *B03C 3/08* (2006.01)
*B03C 3/38* (2006.01)       *B03C 3/40* (2006.01)
*B03C 3/41* (2006.01)       *F01N 3/08* (2006.01)
*F01N 3/24* (2006.01)

(21) Application number: 07828029.4

(22) Date of filing: **19.11.2007**

(86) International application number:
**PCT/JP2007/001252**

(87) International publication number:
**WO 2008/062554 (29.05.2008 Gazette 2008/22)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.11.2006 JP 2006313483**
**20.11.2006 JP 2006313484**

(71) Applicant: **Kabushiki Kaisha Toshiba**
**Minato-ku**
**Tokyo 105-8001 (JP)**

(72) Inventors:
• **TANAKA, Motofumi**
**Tokyo 105-8001 (JP)**
• **YASUI, Hiroyuki**
**Tokyo 105-8001 (JP)**

(74) Representative: **Siegert, Georg**
**Hoffmann - Eitle**
**Patent- und Rechtsanwälte**
**Arabellastrasse 4**
**81925 München (DE)**

(54) **GAS PURIFYING DEVICE, GAS PURIFYING SYSTEM AND GAS PURIFYING METHOD**

(57)     A gas purifying device (10) includes a first electric field forming unit which forms an electric field for discharge in a gas channel (36) in which a purification target gas (EG) flows to generate a discharge plasma (P), and charges and burns PM included in the purification target gas (EG) by action of the discharge plasma (P), a second electric field forming unit which forms an electric field for dust collection to capture the charged PM by an electrical dust collection function and draw out the discharge plasma (P) to the gas channel side, and a charge electrode (35) for charging a flowing purification target gas (EG), which is disposed on an upstream side positions where the first electric field forming unit and the second electric field forming unit are disposed.

FIG. 2

**Description**

Technical Field

The present invention relates to a gas purifying device, a gas purifying system and a gas purifying method for purifying a purification target gas including hazardous substances such as particulate matter by removing the hazardous substances therefrom.

Background Art

Conventionally, as gas purifying devices for purifying hazardous substances such as particulate matter (PM) from an exhaust gas emitted from an exhaust gas generation source such as an engine, there are devices in which a PM filter is provided in a gas channel of an exhaust gas including PM, and the PM is captured by the PM filter. For example, the description of JP-A 11-062558 (KOKAI) discloses a gas purifying device in which substances such as carbon included in the PM captured by the PM filter are burned and removed by a heater, so as to restore the function of the PM filter.

In this gas purifying device, mechanical dust collection is used for capturing the PM, and hence a pressure loss of the exhaust gas is high, which poses a problem of increasing load to the exhaust gas generation source such as an engine.

Further, since the substances such as carbon included in the PM captured by the PM filter are removed by a burning reaction with oxygen, it is necessary to raise the temperature of the gas at approximately 600°C. Accordingly, addition of an external heater, a backwash mechanism, and the like and/or additional injection of fuel for combustion become necessary. Particularly when the exhaust gas temperature is low (particularly at 200°C or lower), it is difficult to remove the PM efficiently.

Accordingly, for example JP-A 2005-320895 (KOKAI) discloses a gas purifying device performing a corona discharge across the flow direction of an exhaust gas to purify the exhaust gas. In this gas purifying device, PM charged by a discharge plasma generated by the corona discharge can be captured by a dielectric or a discharge electrode and removed without heating, so as to purify the exhaust gas.

However, when an exhaust gas from an actual engine having sharp load fluctuation is treated using the conventional purification device, it is possible that the PM captured by the dielectric or discharge electrode is not burned completely and deposits thereon. This may cause that the corona discharge becomes unstable, or that the corona discharge is no longer generated. Moreover, the PM may deposit and reduce the cross-sectional area of the channel in which the exhaust gas flows, thereby causing a problem of increasing a pressure loss in the exhaust gas channel, or the like.

Patent Reference 1: JP-A 11-062558 (KOKAI)
Patent Reference 2: JP-A 2005-320895 (KOKAI)

Disclosure of the Invention

Therefore, an object of the present invention is to provide a gas purifying device, a gas purifying system, and a gas purifying method capable of efficiently removing captured PM without heating to thereby purify a purification target gas.

According to an aspect of the present invention, there is provided a gas purifying device having a first electric field forming unit which forms an electric field for discharge in a gas channel in which a purification target gas flows to generate a discharge plasma, and charges and burns particulate matter included in the purification target gas by action of the discharge plasma, and a second electric field forming unit which forms an electric field for dust collection to capture the charged particulate matter by an electrical dust collection function and draw out the discharge plasma to the gas channel side, the device including a charge electrode for charging a flowing purification target gas, which is disposed on an upstream side of positions where the first electric field forming unit and the second electric field forming unit are disposed.

Further, according to an aspect of the present invention, there is provided a gas purifying device having a first electric field forming unit which forms an electric field for discharge in a gas channel in which a purification target gas flows to generate a discharge plasma, and charges and burns particulate matter included in the purification target gas by action of the discharge plasma, and a second electric field forming unit which forms an electric field for dust collection to capture the charged particulate matter by an electrical dust collection function and draw out the discharge plasma to the gas channel side, in which at least one of an inner wall face of the gas channel on a side where the first electric field forming unit is disposed, an inner wall face of the gas channel on a side where the second electric field forming unit is disposed, a discharge electrode forming the first electric field forming unit, and a dust collection electrode forming the second electric field forming unit has a surface formed of a recess and projection face.

Further, according to an aspect of the present invention, there is provided a gas purifying device having a first electric field forming unit which forms an electric field for discharge in a gas channel in which a purification target gas flows to generate a discharge plasma, and charges and burns particulate matter included in the purification target gas by action of the discharge plasma, and a second electric field forming unit which forms an electric field for dust collection to capture the charged particulate matter by an electrical dust collection function and draw out the discharge plasma to the gas channel side, in which a catalyst layer is formed on a surface of at least one of an inner wall face of the gas channel on a side where the first electric field forming unit is disposed, an inner wall face of the gas channel on a side where the second electric field forming unit is disposed, a discharge electrode forming the first electric field forming unit, and a dust collection electrode forming the second electric field forming unit.

Furthermore, according to an aspect of the present invention, there is provided a gas purifying device having a first electric field forming unit which forms an electric field for discharge in a gas channel in which a purification target gas flows to generate a discharge plasma, and charges and burns particulate matter included in the purification target gas by action of the discharge plasma, and a second electric field forming unit which forms an electric field for dust collection to capture the charged particulate matter by an electrical dust collection function and draw out the discharge plasma to the gas channel side, the device including an additive gas supply unit which supplies an additive gas capable of generating oxidative radicals on an upstream side of positions where the first electric field forming unit and the second electric field forming unit are disposed.

Further, according to an aspect of the present invention, there is provided a gas purifying method for a gas purifying device including a first electric field forming unit which forms an electric field for discharge in a gas channel in which a purification target gas flows to generate a discharge plasma, and charges and burns particulate matter included in the purification target gas by action of the discharge plasma, a second electric field forming unit which forms an electric field for dust collection to capture the charged particulate matter by an electrical dust collection function and draw out the discharge plasma to the gas channel side, and a control unit controlling the first electric field forming unit and the second electric field forming unit, the method including by the control unit, detecting information related to burning treatment of particulate matter in the first electric field forming unit, and controlling an operation state of the first electric field forming unit and/or the second electric field forming unit based on the detected information.

Further, according to an aspect of the present invention, there is provided a gas purifying method for a plurality of gas purifying devices arranged in series or parallel and each including a first electric field forming unit which forms an electric field for discharge in a gas channel in which a purification target gas flows to generate a discharge plasma, and charges and burns particulate matter included in the purification target gas by action of the discharge plasma, a second electric field forming unit which forms an electric field for dust collection to capture the charged particulate matter by an electrical dust collection function and draw out the discharge plasma to the gas channel side, and a control unit controlling the first electric field forming unit and the second electric field forming unit, the method including by the control unit, detecting information related to burning treatment of particulate matter in the first electric field forming unit in each of the gas purifying devices, and controlling an operation state of the first electric field forming unit and/or the second electric field forming unit based on the detected information in each of the gas purifying devices.

Brief Description of Drawings

[FIG. 1] FIG. 1 is a block diagram schematically showing a gas purifying system including a gas purifying device of a first embodiment according to the present invention;
[FIG. 2] FIG. 2 is a view schematically showing a cross section of the gas purifying device of the first embodiment according to the present invention;
[FIG. 3] FIG. 3 is a view showing a cross section of a vicinity of discharge electrodes for describing how a discharge plasma is generated in the vicinity of the discharge electrodes;
[FIG. 4] FIG. 4 is a block diagram schematically showing a gas purifying system having a different structure including the gas purifying device of the first embodiment;
[FIG. 5] FIG. 5 is a view schematically showing a cross section of a gas purifying device of a second embodiment according to the present invention;
[FIG. 6] FIG. 6 is a view schematically showing a cross section of a gas purifying device of a third embodiment according to the present invention;
[FIG. 7] FIG. 7 is a block diagram schematically showing a gas purifying system in which two gas purifying devices according to the present invention are arranged in series;
[FIG. 8] FIG. 8 is a block diagram schematically showing a gas purifying system in which two gas purifying devices according to the present invention are arranged in parallel;

[FIG. 9] FIG. 9 is a block diagram schematically showing a gas purifying system for describing a gas purifying method for a gas purifying device of a fifth embodiment according to the present invention;

[FIG. 10] FIG. 10 is a view schematically showing a cross section of the gas purifying device of the fifth embodiment according to the present invention;

[FIG. 11] FIG. 11 is a block diagram schematically showing a gas purifying system including an additive gas supply device and an oxygen concentration detecting device;

[FIG. 12] FIG. 12 is a block diagram schematically showing a gas purifying system for describing a gas purifying method for a gas purifying device of a sixth embodiment according to the present invention;

[FIG. 13] FIG. 13 is a block diagram schematically showing a gas purifying system for describing a gas purifying method for a gas purifying device of a seventh embodiment according to the present invention; and

[FIG. 14] FIG. 14 is a view schematically showing a cross section of a gas purifying device of an eighth embodiment according to the present invention.

Explanation of Numerals and Symbols

10... gas purifying device, 30... discharge reaction unit, 31... dielectric, 32... discharge electrode, 33... discharge counter electrode, 34... dust collection counter electrode, 35... charge electrode, 36... gas channel, 50... discharge power supply, 51... discharge electrical system, 60... dust collection power supply, 61... dust collection electrical system, EG... purification target gas, P... discharge plasma.

Best Mode for Carrying out the Invention

Hereinafter, embodiments of the present invention will be described with reference to the drawings.

(First Embodiment)

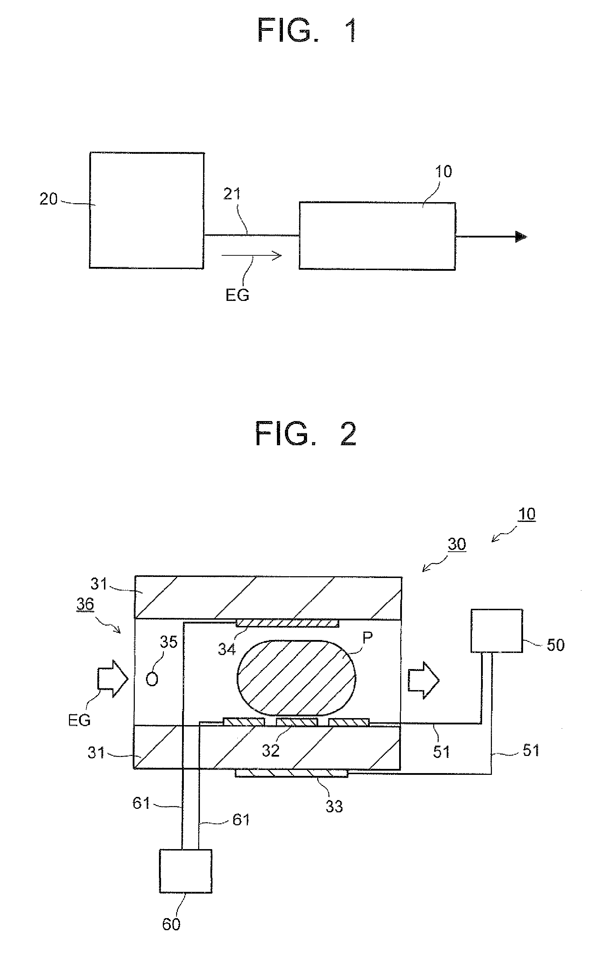

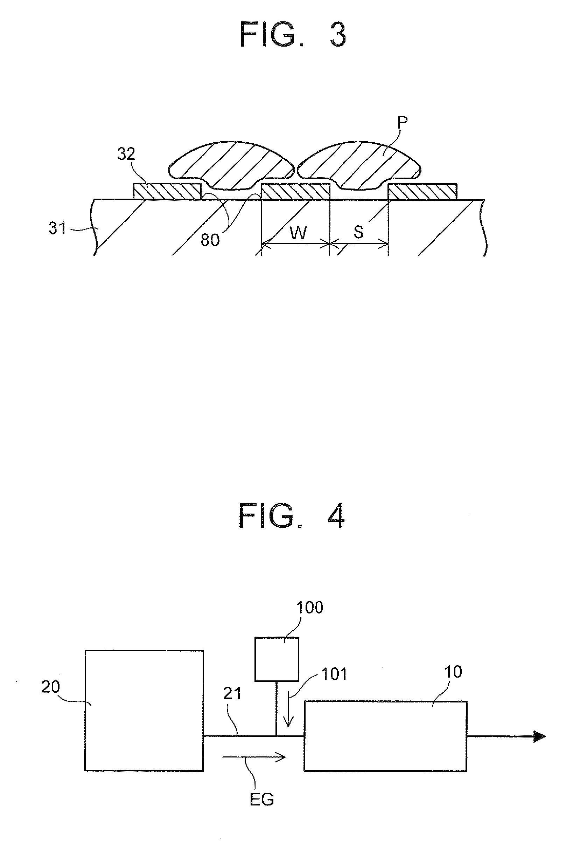

FIG. 1 is a block diagram schematically showing a gas purifying system including a gas purifying device 10 of a first embodiment according to the present invention. FIG. 2 is a view schematically showing a cross section of the gas purifying device 10 of the first embodiment according to the present invention. FIG. 3 is a view showing a cross section of a vicinity of discharge electrodes 32 for describing how a discharge plasma P is generated in the vicinity of the discharge electrodes 32.

As shown in FIG. 1, the gas purifying device 10 is provided in, for example, an exhaust channel 21 in which a purification target gas EG such as an exhaust gas emitted from the engine 20 of an automobile passes through. As shown in FIG. 2, this gas purifying device 10 includes a discharge reaction unit 30 provided in the channel of the purification target gas EG, a discharge power supply 50 connected to this discharge reaction unit 30 via a discharge electrical system 51, and a dust collection power supply 60 connected to the discharge reaction unit 30 via a dust collection electrical system 61.

The discharge reaction unit 30 includes a dielectric 31, discharge electrodes 32, a discharge counter electrode 33 provided to face the discharge electrodes 32 via the dielectric 31, a dust collection counter electrode 34 provided to face the discharge electrodes 32 via the channel of the purification target gas EG, and a charge electrode 35 provided upstream of the discharge counter electrode 33 and the dust collection counter electrode 34.

The dielectric 31 is, for example, a plate or cylinder formed of a dielectric material, and provided in the channel of the purification target gas EG such as an exhaust gas emitted from the engine of an automobile for example. Accordingly, the purification target gas EG is led into the dielectric 31, thereby forming a gas channel 36 of the purification target gas EG. As the dielectric material here, it is possible to use, for example, resin such as Teflon (registered trademark), epoxy, or Kapton, glass, or ceramic such as alumina or aluminum nitride. Further, use of ceramic is effective when treatment at a high temperature is required, such as when treating an exhaust gas from an actual engine. Considering temperature characteristics of dielectric materials, it is effective to use, in light of power consumption reduction, a material having a small dielectric loss at a high temperature, for example alumina or the like. Particularly, a material having a dielectric loss of $\tan\delta < 0.1$ at 300°C which is measured at 1 kHz allows to obtain favorable purification performance. When the relative dielectric constant of the dielectric 31 is 0.1 to 1000, and the thickness of the dielectric 31 is about 0.01 mm to 10 mm, a creeping discharge which will be described later can be easily ignited.

On inner wall faces of this gas channel 36, the discharge electrodes 32 and the dust collection counter electrode 34 are provided to face each other. The discharge electrodes 32 are arranged for example in a comb-like shape such that plural thin platy electrodes are arranged substantially in parallel at predetermined intervals, each of which has one side joined electrically to the discharge electrical system 51. Then the discharge electrodes 32 are arranged so that each platy electrode is substantially perpendicular to a main flow direction of the purification target gas EG flowing in the gas channel 36. These discharge electrodes 32 are formed of a conductive material having corrosion resistance against the purification target gas EG and heat resistance, and stainless steel or the like is used for example. These discharge electrodes 32 may be formed by, for example, directly printing on an inner wall face of the gas channel 36. Further, the dust collection counter electrode 34 has a plate shape and is formed of, similarly to the discharge electrodes 32, a conductive material having corrosion resistance against the purification target gas EG and heat resistance, such as stainless steel for example. Similarly to the discharge electrodes 32, this dust collection counter electrode 34 may be formed by, for example, directly printing on an inner wall face of the gas channel 36 facing the position where the discharge electrodes 32 are arranged. Further, for providing the discharge electrodes 32 and the dust collection counter electrode 34 with corrosion resistance and heat resistance, it is effective to coat the surfaces of metal electrodes with a coating having corrosion resistance and heat resistance. For example, by performing nickel plating or alumina coating with a thickness of 1 $\mu$m to 100 $\mu$m on a stainless or tungsten electrode, for example corrosion in an actual gas environment of an exhaust gas or the like emitted from the engine of an automobile can be suppressed. Further, the direction of the comb-like electrodes may not necessarily be perpendicular to the main flow direction, and may be in a parallel or diagonal direction to the main flow.

Moreover, the discharge counter electrode 33 of the discharge reaction unit 30 is arranged via the dielectric 31, in other words, arranged to face the discharge electrodes 32 across the dielectric 31. The discharge counter electrode 33 is formed of, for example, a thin platy conductive material. Similarly to the discharge electrodes 32, the discharge counter electrode 33 may be formed by directly printing on an outer wall face of the gas channel 36 of the dielectric 31 facing the discharge electrodes 32.

Note that the shapes of the discharge electrodes 32, the discharge counter electrode 33 and the dust collection counter electrode 34 are not limited to the above shapes and are arbitrary. It is preferable that the shape of the discharge electrodes 32 is, for example, linear, dotted, slit, or netted shape, besides the above-described comb-like shape. Using these shapes as the shape of the discharge electrodes 32, electric flux lines in the vicinity of the discharge electrodes 32 become dense, which allow to generate a discharge plasma easily, and thus are effective. Furthermore, a large amount of hazardous substances such as particulate matter (PM) can be caught, and thus hazardous substances, the PM in particular, can be burned and removed efficiently. Further, the shape of the dust collection counter electrode 34 is not limited to the plate shape, and may be slit or netted similarly to the discharge electrodes 32.

Further, one terminal of the discharge power supply 50 is connected to the discharge electrodes 32 of the discharge reaction unit 30 and the other terminal is connected to the discharge counter electrode 33, each via the discharge electrical system 51. The discharge power supply 50 is formed of, for example, primary and secondary power supplies. As the primary power supply, an alternating-current power supply of AC 100 V, $\phi$ 50 Hz or $\phi$ 60 Hz, or a direct-current power supply of DC 12 V or DC 24 V is used. Further, the output voltage of the secondary power supply is, for example, an output voltage having a pulsed (positive polarity, negative polarity, or both positive and negative polarities) or alternating-current (sine wave or intermittent sine wave) waveform. In addition, although the primary power supply and the secondary power supply can be of an integrated structure, use of a power supply such as a battery normally mounted in an automobile as the primary power supply makes it unnecessary to newly dispose the primary power supply, allowing reduction in size of the device. Furthermore, the secondary power supply can be structured including a transformer, and a signal of about a few volts to a few hundred volts shaped by an inverter or the like is increased to an output voltage of a few kilovolts to a few dozen kilovolts by the transformer. To reduce the distance of the high voltage wiring as short as possible, it is desirable to dispose the secondary power supply in the vicinity of the discharge reaction unit 30. Additionally, in the case where the discharge reaction unit 30 turns to a high temperature, or the like, it is preferable that the transformer unit is structured independently from the secondary power supply and only the transformer is disposed in the vicinity of the discharge reaction unit 30, in order to prevent damage by heat to electronic circuits such as inverters.

By applying a voltage of, for example, about a few kilovolts to a few dozen kilovolts between the discharge electrodes 32 and the discharge counter electrode 33 by the discharge power supply 50, an electric field is formed in the gas channel 36 to cause a discharge, and a discharge plasma P is generated in the gas channel 36. At this time, since the dielectric 31 intervenes between the discharge electrodes 32 and the discharge counter electrode 33, and the dielectric 31 is disposed in contact with the discharge electrodes 32, the discharge in the gas channel 36 becomes a creeping discharge formed along the dielectric 31.

The above-described discharge power supply 50, the discharge electrodes 32 and the discharge counter electrode 33 connected with each other via the discharge electrical system 51 form a first electric field forming unit.

On the other hand, one terminal of the dust collection power supply 60 is connected to the dust collection counter electrode 34 of the discharge reaction unit 30 and the other terminal is connected to the discharge electrodes 32 of the discharge reaction unit 30, each via the dust collection electrical system 61. The dust collection power supply 60 is formed of, for example, primary and secondary power supplies. As the primary power supply, an alternating-current power supply of AC 100 V, $\phi$ 50 Hz or $\phi$ 60 Hz, or a direct-current power supply of DC 12 V or DC 24 V is used. Further, the output voltage of the secondary power supply is an output voltage having a direct-current (positive polarity, negative polarity, or both positive and negative polarities), a pulsed (positive polarity, negative polarity, or both positive and negative polarities) or a rectified waveform (half-wave rectification waveform or full-wave rectification waveform).

It is structured such that an electric field can be formed in the gas channel 36 by applying a voltage of, for example, about a few kilovolts between the discharge electrodes 32 and the dust collection counter electrode 34 from the dust collection power supply 60. The above-described dust collection power supply 60, the discharge electrodes 32 and the dust collection counter electrode 34 connected with each other via the dust collection electrical system 61 form a second electric field forming unit. Here, when the voltage V applied between the discharge electrodes 32 and the dust collection counter electrode 34 (distance D) is gradually increased, a space discharge occurs between them and eventually causes sparks. In such a state, electric conductivity in the gas channel increases, and the degree of movement of unipolar charges drawn into the gas channel increases and the charges are absorbed by the discharge electrodes 32 or the dust collection counter electrode 34, making it unable to charge the PM efficiently. To avoid such a state, the voltage V to be applied is preferred to be used in the range that does not cause a discharge spontaneously between the discharge electrodes 32 and the dust collection counter electrode 34. It is preferable that, for example, average electric field intensity defined by V/D is between 1 kV/cm to 30 kV/cm.

Further, the charge electrode 35 is provided upstream (left side in FIG. 2) of the discharge counter electrode 33 and the dust collection counter electrode 34, and disposed across the gas channel 36 in a direction substantially perpendicular to the main flow direction of the purification target gas EG. The charge electrode 35 has a rod shape for example, and when formed by a column, it is formed to have a diameter of about 0.3 mm to 10 mm. Further, the charge electrode 35 is formed of a conductive material having corrosion resistance against the purification target gas EG and heat resistance, and stainless steel or the like is used for example. Both ends of the charge electrode 35 may be connected to the discharge power supply 50 via the above-described discharge electrical system 51 or connected to the dust collection power supply 60 via the above-described dust collection electrical system 61. Additionally, a power supply for charge electrode may be provided separately for applying a voltage to the charge electrode 35. The voltage to be applied to the charge electrode 35 may either be of alternating current or direct current.

When the discharge power supply 50 is used as the power supply for charge electrode, the output voltage of the secondary power supply is, as described above, for example an output voltage having a pulsed (positive polarity, negative polarity, or both positive and negative polarities) or an alternating-current (sine wave or intermittent sine wave) waveform, and a voltage of about a few kilovolts to a few dozen kilovolts for example is applied across the both ends of the charge electrode 35. This causes a corona discharge on the charge electrode 35, charging the purification target gas EG flowing around the charge electrode 35. Further, when the dust collection power supply 60 is used as the power supply for charge electrode, the output voltage of the secondary power supply is, as describedabove, for example an output voltage having a direct-current (positive polarity, negative polarity, or both positive and negative polarities), a pulsed (positive polarity, negative polarity, or both positive and negative polarities) or a rectified waveform (half-wave rectification waveform or full-wave rectification waveform), and a voltage of about a few kilovolts for example is applied across the both ends of the charge electrode 35. This causes a corona discharge on the charge electrode 35, charging the purification target gas EG flowing around the charge electrode 35.

Note that, although FIG. 2 shows an example of the structure of the discharge reaction unit 30 including one charge electrode 35, a plurality of charge electrodes 35 may be disposed. As an arrangement example of charge electrodes 35 in this case, a plurality of charge electrodes 35 are arranged, for example, upstream of the discharge counter electrode 33 and the dust collection counter electrode 34, at predetermined intervals in a direction substantially perpendicular to the main flow direction of the purification target gas EG. The predetermined intervals are set to the degree which at least does not cause a spark discharge between adjacent charge electrodes 35. In addition, when the charge electrodes 35 are arranged in a direction from the discharge electrodes 32 to the dust collection counter electrode 34 (vertical direction in FIG. 2), it may be either a linear arrangement or a non-linear arrangement such that adjacent charge electrodes 35 are arranged at different positions from each other. Arranging the plurality of charge electrodes 35 in this manner, PM that is a hazardous substance included in the purification target gas EG flowing in the gas channel 36 is charged almost evenly across the cross section of the gas channel 36.

Next, operation of the gas purifying device 10 will be explained.

First, the purification target gas EG such as an exhaust gas emitted from the engine of an automobile or the like is led to the gas channel 36 formed in the discharge reaction unit 30 and flows into the discharge reaction unit 30.

Here, an output voltage having a pulsed (positive polarity, negative polarity, or both positive and negative polarities), an alternating-current (sine wave or intermittent sine wave), or a rectified waveform (half-wave rectification waveform or full-wave rectificationwaveform) is applied to the charge electrode 35 disposed at the entrance of the discharge reaction unit 30. This causes a corona discharge on the charge electrode 35, and the PM included in the purification target gas EG flowing around the electrode is charged.

The purification target gas EG including the charged PM flows into between the discharge electrodes 32 and the dust collection counter electrode 34. Here, a pulsed (positive polarity, negative polarity, or both positive and negative polarities) or alternating-current (sine wave or intermittent sine wave) voltage is applied between the discharge electrodes 32 and the discharge counter electrode 33 from the discharge power supply 50. Accordingly, an electric field is formed intensively between the discharge electrodes 32 and the discharge counter electrode 33, particularly in the vicinity of the discharge electrodes 32, to cause a creeping discharge along the dielectric 31, and a discharge plasma P occurs accompanying the creeping discharge.

Here, since the secondary output voltage of the discharge power supply 50 is a pulsed (positive polarity, negative polarity, or both positive and negative polarities) or alternating-current (sine wave or intermittent sine wave) output voltage, intervention of the dielectric 31 does not cause deposition of surface charges on the surface of the dielectric 31 to stop the discharge or cause the discharge to turn to an arc discharge. Thus, an even and stable discharge plasma P occurs.

On the other hand, a voltage having a direct-current (positive polarity, negative polarity, or both positive and negative polarities), a pulsed (positive polarity, negative polarity, or both positive and negative polarities), or a rectified waveform (half-wave rectification waveform or full-wave rectification waveform) is applied between the discharge electrodes 32 and the dust collection counter electrode 34 from the dust collection power supply 60. That is, a voltage that does not change in polarity over time is applied between the discharge electrodes 32 and the dust collection counter electrode 34 from the dust collection power supply 60, forming an even electric field between the discharge electrodes 32 and the dust collection counter electrode 34.

Consequently, by action of the electric field formed between the discharge electrodes 32 and the dust collection counter electrode 34, the discharge plasma P is drawn largely into the gas channel 36 from the discharge electrodes 32. Then the PM included in the purification target gas EG flowing in the gas channel 36 is charged by collision with electrons and ions generated by the discharge plasma P drawn largely into the gas channel 36. That is, the PM is charged by the aforementioned charge electrode 35 and is also charged by the discharge plasma P. Further, as described above, the discharge plasma P expands across the cross-sectional area of the gas channel 36 by being drawn largely from the discharge electrodes 32 into the gas channel 36, and thus probability to come in contact with the purification target gas EG flowing in the gas channel 36 increases. This increases the ratio of the PM included in the purification target gas EG to be charged.

Further, as described above, since the direction of the electric field formed between the discharge electrodes 32 and the dust collection counter electrode 34 does not change over time due to output voltage characteristics of the dust collection power supply 60, the discharge plasma P drawn into the gas channel 36 becomes a discharge plasma P having either positive or negative polarity. This causes the major part of the PM to be charged positively or negatively. Accordingly, the trace of the charged PM is bent by Coulomb force received from the electric field formed by operation of the second electric field forming unit. The direction of bending is decided by charges included in the PM and the direction of electric field, and thus there occur PM bent toward the discharge electrodes 32 side and PM bent toward the dust collection counter electrode 34 side by the polarity of charges.

Thus, PM on one side charged in the gas channel 36 is attracted to the discharge electrodes 32 side by electric force of the discharge plasma P in addition to the dust collection function of the electric field formed between the discharge electrodes 32 and the dust collection counter electrode 34 by operation of the dust collection power supply 60, and is captured by the surfaces of the discharge electrodes 32 and the surface of the dielectric 31 in the vicinity of the discharge electrodes 32. Further, PM on the other side different in charged polarity from the PM on one side is captured by the surface of the dust collection counter electrode 34 and the surface of the dielectric 31 in the vicinity of the dust collection counter electrode 34. That is, the PM charged either positively or negatively receives electric force in a uniform direction by action of the electric field and the unipolar discharge plasma P, and is captured on the discharge electrodes 32 side or the dust collection counter electrode 34 side.

As described above, the PM that is charged by the charge electrode 35 and further charged by the discharge plasma P has a sufficient charge amount and receives electric force in a uniform direction by action of the electric field and the unipolar discharge plasma P, and is captured efficiently on the discharge electrodes 32 side or the dust collection counter electrode 34 side. In this manner, the electric field formed by operation of the dust collection power supply 60 has roles of improving charge efficiency for PM in the gas channel 36 due to drawing effect of the discharge plasma P as well as giving electric force to the charged PM to be captured efficiently on the discharge electrodes 32 side or the dust collection counter electrode 34 side. Here, when the voltage V applied between the discharge electrodes 32 and the dust collection counter electrode 34 (distance D) is gradually increased, a space discharge occurs between them and eventually causes sparks. In such a state, electrical conductivity in the gas channel increases, and the degree of movement of unipolar charges drawn into the gas channel increases and the charges are absorbed by the discharge electrodes 32 or the dust collection counter electrode 34, making it unable to charge the PM efficiently. To avoid such a state, the voltage V to be applied is preferred to be used in the range that does not cause a discharge spontaneously between the discharge electrodes 32 and the dust collection counter electrode 34. It is preferable that, for example, average electric field intensity defined by V/D is between 1 kV/cm to 30 kV/cm.

Here, with reference to FIG. 3, how a discharge plasma P occurs in the vicinity of the discharge electrodes 32 will be described.

The discharge reaction unit 30 is provided with the comb-like discharge electrodes 32 such that, for example, plural thin platy electrodes are arranged substantially in parallel at predetermined intervals, each of which has one side joined electrically to the discharge electrical system 51. Then the discharge electrodes 32 are arranged so that each platy (width W) electrode is substantially perpendicular to a main flow direction of the purification target gas EG flowing in the gas channel 36. Note that the interval between platy electrodes is denoted here by S. Specifically, in the part where the discharge electrodes 32 are disposed, electrodes with width W and dielectrics with width S are exposed alternately, and the PM will be captured in these portions.

In general, when the discharge electrodes 32 are formed of one plate for example, a discharge plasma P exists in high density at both ends of the discharge electrode 32 and thus the PM is burned there. However, around the center of the discharge electrode 32, the density of the discharge plasma P is low and thus the PM is not burned and deposits. When the PM deposits in this manner, the corona discharge is hindered and becomes unstable, or the cross-sectional area of the gas channel 36 decreases by deposition of the PM, and a pressure loss in the gas channel 36 increases, making it impossible to stably operate the gas purifying device.

On the other hand, as described above, when the discharge electrodes 32 are in a comb-like shape for example, and a voltage is applied to the discharge electrodes 32, a discharge plasma P develops from a triple point 80 (contact point between the platy electrodes, the dielectric, and air) where the electric field becomes highest and spreads out to a portion where the discharge electrodes 32 are provided and the PM is captured, that is, where the electrodes with a width W and dielectric with a width S are exposed alternately (see FIG. 3). This enables to burn the PM reliably and prevents deposition of the PM. To allow development of a discharge plasma P evenly on a flat surface, the width W and width S are preferred to be about 0.1 mm to 20 mm. In addition, the discharge electrodes 32 having a mesh shape or netted shape also allows to obtain operation and effect similar to those in the case of the comb-like discharge electrodes 32. Further, when using the comb-like discharge electrodes 32, it is not necessary that widths W and widths S between combs are constant. For example, the W and S may be shorter in the vicinity of entrance of the purification target gas EG, and the W and S may be longer in the vicinity of exit of the purification target gas EG. Thus, it becomes possible to concentrate discharge power to the vicinity of entrance where PM concentration is high, thereby burning the PM efficiently. Further, it is not necessary that heights of combs are constant. For example, the heights may be lower in the vicinity of entrance of the purification target gas EG, and higher in the vicinity of exit. Thus, the positional relationship of a discharge with respect to a boundary layer of flow expanding from the entrance toward the exit is made constant from the entrance to the exit, and thereby uniform treatment can be performed. Further, the discharge plasma P occurred on the discharge electrodes 32 side is, as described above, drawn to the dust collection counter electrode 34 side by operation of the dust collection power supply 60, and expands across the predetermined cross section of the gas channel 36.

Further, in the gas channel 36 in the discharge reaction unit 30, high energy electrons generated by the discharge plasma P collide with the purification target gas EG, thereby generating oxidative radicals such as O, OH, $O_3$, $O^{2-}$ as well as $NO_2$ or the like. The oxidative radicals further react with hydrocarbons in the purification target gas EG and generates other active hydrocarbon molecules. Further, $NO_2$ undergoes a burning reaction with PM to disintegrate and oxidize the PM.

The PM rushed into the discharge plasma P undergoes a burning reaction in stages to be disintegrated and oxidized without treatment such as heating, and finally turns to carbon monoxide, carbon dioxide, and so on. Here, part of the PM rushed into the high-density discharge plasma P disintegrates in the air, and the rest collides with and captured on the surfaces of the discharge electrodes 32 and the surface of the dielectric 31 in the vicinity of the discharge electrodes 32, or the surface of the dust collection counter electrode 34 and the surface of the dielectric 31 in the vicinity of the dust collection counter electrode 34. The PM captured on the surfaces stays for long time in the reaction field with oxidative radicals, undergoes a burning reaction during this period such as disintegration and oxidization in stages due to action of the oxidative radicals without treatment such as heating, and finally turns to carbon monoxide, carbon dioxide, and so on. Thus, the inside of the discharge reaction unit 30 is always kept clean, and thereby it is possible to prevent reduction of the discharge plasma P and deterioration of the electrical dust collection function due to such fouling. In particular, igniting a creeping discharge in the vicinity of PM captured on a surface makes the distance between oxidative radicals and the PM close, which enables to use oxidative radicals, which have shorter lifetime, effectively for a burning reaction of substances such as carbon and hydrocarbon included in the PM. Thus, more efficient treatment becomes possible.

The purification target gas EG from which the PM is thus removed by the discharge reaction unit 30 is exhausted to the outside of the discharge reaction unit 30.

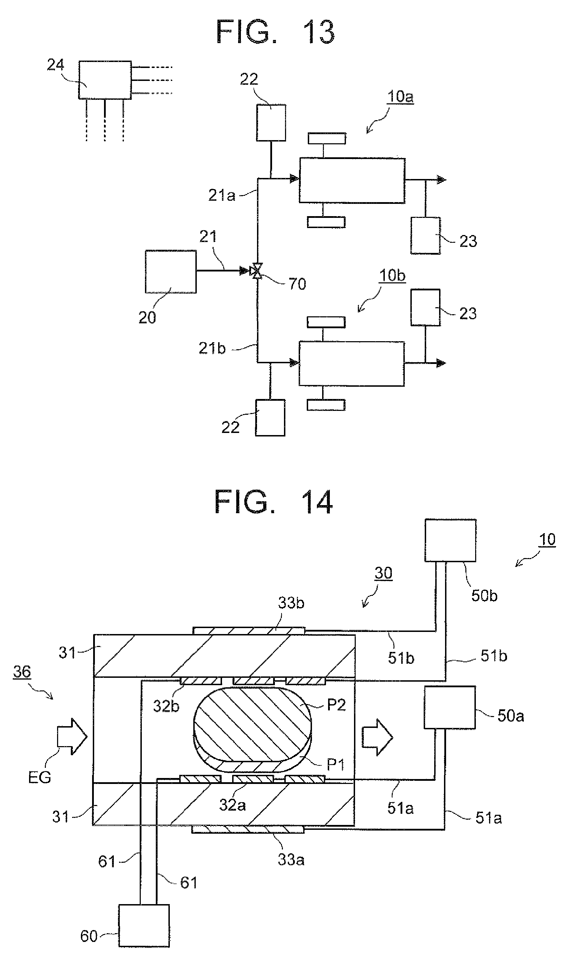

In the foregoing description, the discharge plasma P expands to the dust collection counter electrode 34 side as described above also in the case where PM is captured on the surface of the dust collection counter electrode 34 and the surface of the dielectric 31 in the vicinity of the dust collection counter electrode 34. Thus, the captured PM can be disintegrated and oxidized in stages. Here, in order to more efficiently burn the PM captured on the surface of the dust collection counter electrode 34 and the surface of the dielectric 31 in the vicinity of the dust collection counter electrode 34, for example as described in FIG. 13 of JP-A 2005-320895 (KOKAI), it may be structured such that a discharge electrode is provided on the inner wall face of the dielectric 31 facing the discharge electrodes 32 instead of providing the dust collection counter electrode 34, and a discharge counter electrode is provided on the side facing this discharge electrode via the dielectric 31. That is, it may be a structure provided with two groups of discharge electrodes and discharge counter electrodes facing each other.

As described above, in the gas purifying device 10 of the first embodiment, the charge electrode 35 is provided upstream of the discharge counter electrode 33 and the dust collection counter electrode 34. The PM that is a hazardous substance included in the purification target gas EG flowing into the discharge reaction unit 30 is charged, and this PM is further charged by the discharge plasma P generated by the first electric field forming unit. Thus, the PM can have a sufficient amount of charges. Accordingly, this PM receives electric force in a uniform direction by action of an electric field generated by the second electric field forming unit and the unipolar discharge plasma P, and can be captured efficiently by the surfaces of the discharge electrodes 32 and the surface of the dielectric 31 in the vicinity of the discharge electrodes 32, or on the surface of the dust collection counter electrode 34 and the surface of the dielectric 31 in the vicinity of the dust collection counter electrode 34. Then the captured PM undergoes a burning reaction with oxidative radicals in the discharge plasma P to be removed without heating, and thus the purification target gas can be purified. Further, since the PM can be captured and removed efficiently, sufficient performance can be exhibited also in the case of treating, for example, an exhaust gas from an actual engine having sharp load fluctuation.

Here, in addition, a gas purifying system having a different structure including the gas purifying device 10 of the first embodiment will be described.

FIG. 4 is a block diagram schematically showing the gas purifying system having a different structure including the gas purifying device 10 of the first embodiment.

This gas purifying system having a different structure is such that the gas purifying system shown in FIG. 1 is provided with an additive gas supply device 100 for supplying an additive gas to the upstream exhaust channel 21 where the purification target gas EG flows into the gas purifying device 10.

This additive gas supply device 100 is for supplying an additive gas of oxygen, vapor or the like for example, which is capable of generating the aforementioned oxidative radicals such as O, OH, $O_3$, $O^{2-}$ as well as $NO_2$. This additive gas supply device 100 and the exhaust channel 21 are coupled by a pipe, and the additive gas emitted from the additive gas supply device 100 is added to and mixed in the purification target gas EG flowing in the exhaust channel 21, and flows into the discharge reaction unit 30.

Thus, providing the additive gas supply device 100 allows to increase a generated amount of oxidative radicals to facilitate the burning reaction of PM. Accordingly, the PM captured on the surfaces of the discharge electrodes 32 and the surface of the dielectric 31 in the vicinity of the discharge electrodes 32, or the surface of the dust collection counter electrode 34 and the surface of the dielectric 31 in the vicinity of the dust collection counter electrode 34 can be more efficiently disintegrated and oxidized, and the purification target gas can be purified.

Note that when the burning reaction of PM can be facilitated and the purification target gas can be purified just by providing the additive gas supply device 100, the gas purifying device 10 may be structured without providing the charge electrode 35 that is provided in the gas purifying device 10.

(Second Embodiment)

A gas purifying device 150 of a second embodiment according to the present invention has the same structure as the gas purifying device 10 of the first embodiment except that the charge electrode 35 in the gas purifying device 10 of the first embodiment is not provided, and shapes of the inner wall faces of the gas channel 36 on the sides where the discharge electrodes 32 and the dust collection counter electrode 34 are arranged are different. Thus mainly these different structures will be described here.

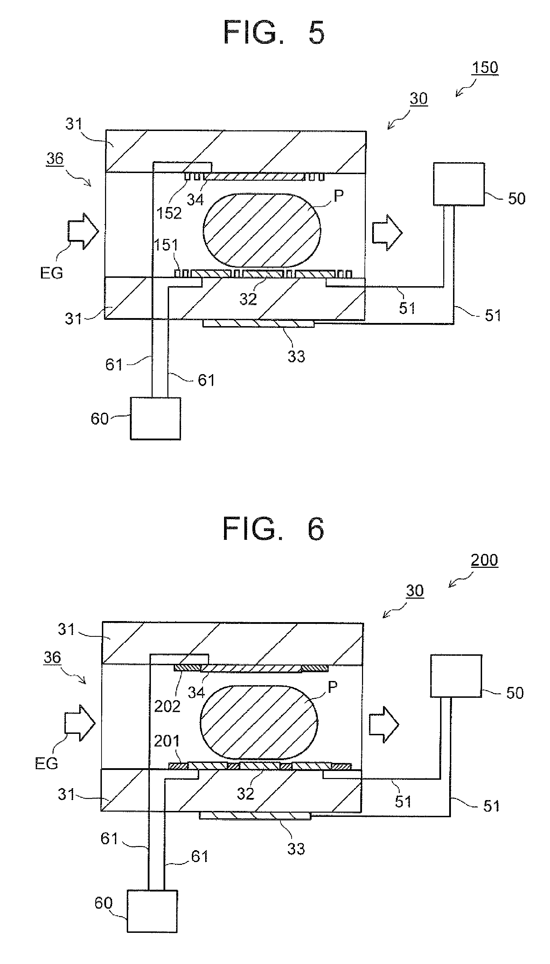

FIG. 5 is a view schematically showing a cross section of the gas purifying device 150 of the second embodiment according to the present invention. Note that the same parts as those in the structure of the gas purifying device 10 of the first embodiment are given the same reference numerals, and overlapping descriptions are omitted or simplified.

As shown in FIG. 5, the gas purifying device 150 of the second embodiment includes a discharge reaction unit 30 provided in the channel of a purification target gas EG, a discharge power supply 50 connected to this discharge reaction unit 30 via a discharge electrical system 51, and a dust collection power supply 60 connected to the discharge reaction unit 30 via a dust collection electrical system 61.

The discharge reaction unit 30 includes a dielectric 31, discharge electrodes 32, a discharge counter electrode 33 provided to face the discharge electrodes 32 via the dielectric 31, and a dust collection counter electrode 34 provided to face the discharge electrodes 32 via the channel of the purification target gas EG.

The dielectric 31 is, for example, a plate or cylinder formed of a dielectric material, and provided in the channel of the purification target gas EG such as an exhaust gas emitted from the engine of an automobile for example. Accordingly, the purification target gas EG is led into the dielectric 31, thereby forming a gas channel 36 of the purification target gas EG. Further, on the inner wall faces of this gas channel 36, the discharge electrodes 32 and the dust collection counter electrode 34 are provided to face each other. Moreover, as shown in FIG. 5, recess and projection portions 151, 152 are formed along the main flow direction of the purification target gas EG on inner wall faces of the gas channel 36 on the sides where the discharge electrodes 32 and the dust collection counter electrode 34 are provided, the inner wall faces being in the vicinities of the discharge electrodes 32 and the dust collection counter electrode 34. Note that regarding the direction of forming the recess and projection portions 151, 152, they are not limited to be formed in the main flow direction of the purification target gas EG, and may be formed for example in a direction substantially perpendicular to the main flow direction of the purification target gas EG on the inner wall faces in the vicinities of the discharge electrodes 32 and the dust collection counter electrode 34. Further, it is not necessary that heights of the recess and projection portions 151, 152 are constant. For example, the heights may be lower in the vicinity of entrance of the purification target gas EG, and higher in the vicinity of exit. Thus, the positional relationship of the recess and projection portions 151, 152 with respect to a boundary layer of flow expanding from the entrance toward the exit is made constant from the entrance to the exit, and thereby uniform treatment can be performed. Further, it may be a structure such that the discharge electrodes 32 and the dust collection counter electrode 34 themselves form recesses and projections with respect to the flat inner wall faces, for example a comb-like structure.

Furthermore, surfaces of the discharge electrodes 32 and the dust collection counter electrode 34 may be in a recess and projection structure along the main flow direction of the purification target gas EG, similarly to the inner wall faces in the vicinities of the discharge electrodes 32 and the dust collection counter electrode 34 described above. Note that the recess and projection structure is not limited to be formed along the main flow direction of the purification target gas EG, and may be formed for example in a direction substantially perpendicular to the main flow direction of the purification target gas EG.

For example, as shown in FIG. 5, when the recess and projection portions 151, 152 are formed along the main flow direction of the purification target gas EG on the inner wall faces in the vicinities of the discharge electrodes 32 and the dust collection counter electrode 34, the purification target gas EG collides substantially perpendicularly with projection portions of the recess and projection portions 151, 152, and circulating flows are formed immediately downstream of the projection portions. The circulating flows drag in PM, allowing to capture more PM. Note that similar operation and effect can be obtained when the surfaces of the discharge electrodes 32 and the dust collection counter electrode 34 are in a recess and projection structure along the main flow direction of the purification target gas EG, similarly to the inner wall faces in the vicinities of the discharge electrodes 32 and the dust collection counter electrode 34 described above. Further, the surface areas of the inner wall faces increase as compared to the case where the inner wall faces are formed by flat faces, and this also improves capturing ratio of PM.

On the other hand, when the recess and projection portions 151, 152 are formed along the direction substantially perpendicular to the main flow direction of the purification target gas EG on the inner wall faces in the vicinities of the discharge electrodes 32 and the dust collection counter electrode 34, trenches are formed by the recess and projection portions 151, 152 in the main flow direction of the purification target gas EG. The purification target gas EG flows along these trenches. In this case, the surface areas of the inner wall faces are increased as compared to the case where the inner wall faces are formed by flat faces, thereby allowing to capture more PM.

As described above, in the gas purifying device 150 of the second embodiment, the recess and projection portions 151, 152 are formed on the inner wall faces in the vicinities of the discharge electrodes 32 and the dust collection counter electrode 34, to thereby increase the surface areas, allowing to capture and remove more PM. In addition, the surface areas increase also when the surfaces of the discharge electrodes 32 and the dust collection counter electrode 34 are in a recess and projection structure, and thus similar operation and effect can be obtained.

Further, when the recess and projection portions 151, 152 are formed along the main flow direction of the purification target gas EG, circulating flows are formed immediately downstream of the projection portions, and more PM can be captured by dragging in the PM in the circulating flows. In addition, circulating flows are formed immediately downstream of the projection portions also when the surfaces of the discharge electrodes 32 and the dust collection counter electrode 34 are in a recess and projection structure along the main flow direction of the purification target gas EG, and thus similar operation and effect can be obtained.

Here, instead of providing the recess and projection portions 151, 152, surface layers of the inner wall faces in the vicinities of the discharge electrodes 32 and the dust collection counter electrode 34 may be formed of, for example, porous layers formed of a dielectric material. Further, instead of forming the surfaces of the discharge electrodes 32 and the dust collection counter electrode 34 in a recess and projection structure, for example, they may be formed of porous layers constituted of foam metal having corrosion resistance against the purification target gas EG, heat resistance, and conductivity.

When the surface layers of the inner wall faces in the vicinities of the discharge electrodes 32 and the dust collection counter electrode 34 and the surface layers of the discharge electrodes 32 and the dust collection counter electrode 34 are thus formed of porous layers, the surface areas increase, allowing to capture and remove more PM. Further, the PM is captured by colliding with the discharge electrodes 32, the dust collection counter electrode 34, and the inner wall faces in the vicinities of these electrodes. By forming these faces by porous layers, recoiling of the PM is prevented when colliding, thereby increasing the capturing ratio.

Further, the gas purifying device 150 of the second embodiment may be provided with the charge electrode 35 provided in the gas purifying device 10 of the first embodiment. Thus, in addition to the operation and effect of the gas purifying device 150 of the above-described second embodiment, operation and effect similar to those of the gas purifying device 10 of the first embodiment can be obtained.

Furthermore, the gas purifying system including the gas purifying device 150 of the second embodiment may be provided with the additive gas supply device 100 similarly to the gas purifying system including the gas purifying device 10 of the first embodiment. Thus, the generated amount of oxidative radicals can be increased to facilitate the burning reaction of PM, and the captured PM can be disintegrated and oxidized more efficiently.

(Third Embodiment)

A gas purifying device 200 of a third embodiment according to the present invention has the same structure as the gas purifying device 10 of the first embodiment except that that the charge electrode 35 in the gas purifying device 10 of the first embodiment is not provided, and catalyst layers 201, 202 are provided on the inner wall faces of the gas channel 36 on the sides where the discharge electrodes 32 and the dust collection counter electrode 34 are arranged. Thus mainly these different structures will be described here.

FIG. 6 is a view schematically showing a cross section of the gas purifying device 200 of the third embodiment according to the present invention. Note that the same parts as those in the structure of the gas purifying device 10 of the first embodiment are given the same reference numerals, and overlapping descriptions are omitted or simplified.

As shown in FIG. 6, the gas purifying device 200 of the third embodiment includes a discharge reaction unit 30 provided in the channel of a purification target gas EG, a discharge power supply 50 connected to this discharge reaction unit 30 via a discharge electrical system 51, and a dust collection power supply 60 connected to the discharge reaction unit 30 via a dust collection electrical system 61.

The discharge reaction unit 30 includes a dielectric 31, discharge electrodes 32, a discharge counter electrode 33 provided to face the discharge electrodes 32 via the dielectric 31, and a dust collection counter electrode 34 provided to face the discharge electrodes 32 via the channel of the purification target gas EG.

The dielectric 31 is, for example, a plate or cylinder formed of a dielectric material, and provided in the channel of the purification target gas EG such as an exhaust gas emitted from the engine of an automobile for example. Accordingly, the purification target gas EG is led into the dielectric 31, thereby forming a gas channel 36 of the purification target gas EG. Further, on the inner wall faces of this gas channel 36, the discharge electrodes 32 and the dust collection counter electrode 34 are provided to face each other. Moreover, as shown in FIG. 6, the catalyst layers 201, 202 are formed on surfaces of inner wall faces of the gas channel 36 on the sides where the discharge electrodes 32 and the dust collection counter electrode 34 are provided, the inner wall faces being in the vicinities of the discharge electrodes 32 and the dust collection counter electrode 34.

These catalyst layers 201, 202 are formed by applying a catalyst on the inner wall faces in the vicinities of the discharge electrodes 32 and the dust collection counter electrode 34. Further, the catalyst layers 201, 202 may be formed by providing porous bodies in a thin plate shape carrying a catalyst on the inner wall faces in the vicinities of the discharge electrodes 32 and the dust collection counter electrode 34. As the catalyst, there is used a platinum-based oxidation catalyst or a three way catalyst, a catalyst using metal of Group 8, Group 1B, Group 2B, Group 3B, or Group 4B, particularly any one or more selected from Pt, Fe, Co, Ni, Cu, Zn, Ga, In, and Sn, or a complex oxide or oxide solid solution simultaneously using any one or more selected from the above ones and Al, Ti, Zr, and Si, a catalyst using a mixture of two or more metal oxides, a catalyst exhibiting a non-Langmuir type reaction mechanism, or the like.

Next, disintegration and oxidation of PM in the discharge reaction unit 30 will be described.

The discharge plasma P drawn into the gas channel 36 becomes a discharge plasma P having either positive or negative polarity, and thus the major part of the PM is charged positively or negatively. Accordingly, the trace of the charged PM is bent by Coulomb force received from the electric field formed by operation of the second electric field forming unit. The direction of bending is decided by charges included in the PM and the direction of electric field, and thus there occur PM bent toward the discharge electrodes 32 side and PM bent toward the dust collection counter electrode 34 side by the polarity of charges.

Part of the PM rushed into the high-density discharge plasma P disintegrates in the air, and the rest collides with and captured on the surfaces of the discharge electrodes 32 and the catalyst layer 201 in the vicinity of the discharge electrodes 32, or the surface of the dust collection counter electrode 34 and the catalyst layer 202 in the vicinity of the dust collection counter electrode 34.

Here, normally the catalyst exhibit its catalytic activity at high temperatures. Thus, when the exhaust gas temperature is low, for example when the automobile is traveling at low speed, the catalyst will not be activated, and the PM cannot be oxidized efficiently. In general, a catalytic reaction is a multistage reaction constituted of a large number of reactions on the surface of a catalyst, and one reaction among them becomes a rate determiner and defines the reaction rate.

In the present invention, it is structured such that products of the reaction that becomes a rate determiner are generated by a plasma chemical reaction in the purification target gas EG, and are supplied externally to the catalyst surface. This facilitates a catalytic reaction having low activation energy. Then, without heating to the temperature at which the catalytic activity is exhibited, the PM captured on the catalyst layers 201, 202 disintegrate and oxidize efficiently, finally turning to carbon monoxide, carbon dioxide, and so on, by allowing the discharge plasma P and the catalyst to exist together. Further, also when the exhaust gas temperature is low, for example when the automobile is traveling at low speed, the PM can be disintegrated and oxidized sufficiently.

In addition, when the exhaust gas temperature is high such as when the automobile is traveling at high speed, the catalytic activity is facilitated sufficiently by its burning gas temperature, and thus the applied voltage in the first electric field forming unit for generating a discharge plasma P can be decreased.

Accordingly, power consumed by the first electric field forming unit can be suppressed.

Further, when the PM is captured on the surface of the dust collection counter electrode 34 and the surface of the dielectric 31 in the vicinity of the dust collection counter electrode 34, the PM captured on the catalyst layer 202 can be integrated and oxidized efficiently by allowing the discharge plasma P and the catalyst to exist together as described above. However, for allowing more efficient disintegration and burning, a structure described in FIG. 13 of JP-A 2005-320895 (KOKAI) can be adopted for example. That is, it may be structured such that a discharge electrode is provided on the inner wall face of the dielectric 31 facing the discharge electrodes 32 instead of providing the dust collection counter electrode 34, and a discharge counter electrode is provided on the side facing this discharge electrode via the dielectric 31.

As described above, in the gas purifying device 200 of the third embodiment, the catalyst layers 201, 202 are formed on the inner wall faces in the vicinities of the discharge electrodes 32 and the dust collection counter electrode 34, and the discharge plasma P and the catalyst are allowed to exist together, thereby allowing to efficiently disintegrate and oxidize the PM captured on the catalyst layers 201, 202 without heating to the temperature at which the catalytic activity is exhibited. Thus, the PM can be removed from the purification target gas EG, and the purification target gas EG can be purified.

Further, in the above-described embodiment, an example is given in which the catalyst layers 201, 202 are provided on the surf aces of the inner wall faces in the vicinities of the discharge electrodes 32 and the dust collection counter electrode 34, but the catalyst layers 201, 202 may be provided on the surfaces of the discharge electrodes 32 and the dust collection counter electrode 34. This structure also allows to obtain operation and effect similar to the operation and effect described above.

Further, when the catalyst layers 201, 202 are formed of porous layers, the surface areas increase, allowing to capture and remove more PM. Furthermore, the PM is captured by colliding with the discharge electrodes 32, the dust collection counter electrode 34, and the inner wall faces in the vicinities of these electrodes. By forming these faces by porous layers, recoiling of the PM is prevented when colliding, thereby increasing the capturing ratio.

Further, the gas purifying device 200 of the third embodiment may be provided with the charge electrode 35 provided in the gas purifying device 10 of the first embodiment. Thus, in addition to the operation and effect of the gas purifying device 200 of the above-described third embodiment, operation and effect similar to those of the gas purifying device 10 of the first embodiment can be obtained.

Furthermore, the gas purifying system including the gas purifying device 200 of the third embodiment may be provided with the additive gas supply device 100 similarly to the gas purifying system including the gas purifying device 10 of the first embodiment. Thus, the generated amount of oxidative radicals can be increased to facilitate the burning reaction of PM, and the captured PM can be disintegrated and oxidized more efficiently.

(Fourth Embodiment)

Here, a gas purifying system in which the gas purifying devices 10, 150, 200 according to the present invention are arranged in series, and a gas purifying system in which the aforementioned devices are arranged in parallel will be described.

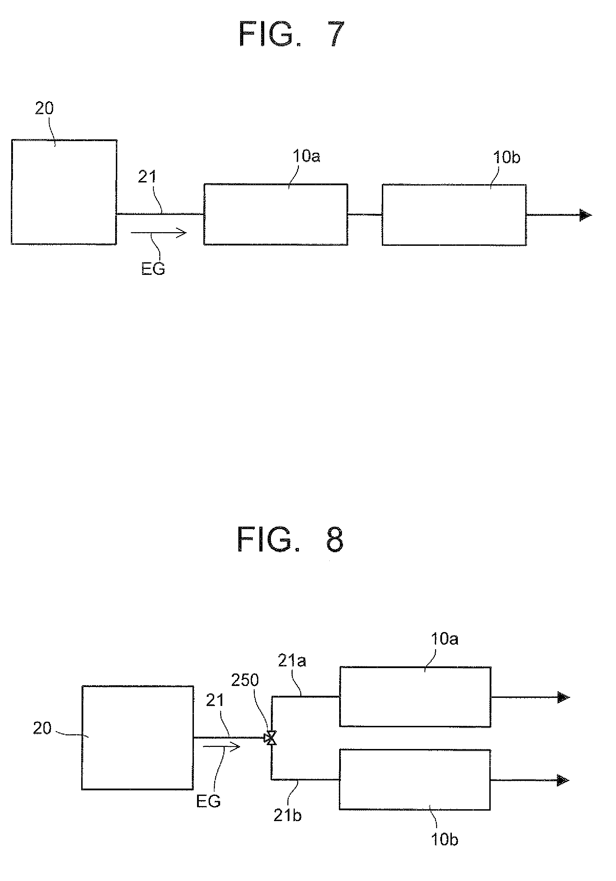

FIG. 7 is a block diagram schematically showing a gas purifying system in which two gas purifying devices 10a, 10b according to the present invention are arranged in series. FIG. 8 is a block diagram schematically showing a gas purifying system in which two gas purifying devices 10a, 10b according to the present invention are arranged in parallel. Note that the gas purifying devices 10a, 10b used here may be formed of any one of the gas purifying devices 10, 150, 200 in the above-described first to third embodiments.

In the gas purifying system shown in FIG. 7, a purification target gas EG such as an exhaust gas emitted from the engine 20 of an automobile is introduced first to the upstream gas purifying device 10a arranged in series via an exhaust channel 21. Subsequently, the purification target gas EG exhausted from the upstream gas purifying device 10a is introduced into the downstream gas purifying device 10b and exhausted thereafter.

In the gas purifying system shown in FIG. 8, the purification target gas EG such as an exhaust gas emitted from the engine 20 of an automobile passes through an exhaust channel 21 and further through either of branched exhaust channels 21a, 21b branched from the exhaust channel 21, and is introduced into the gas purifying device 10a or the gas purifying device 10b and exhausted thereafter. Further, a switching valve 250 for switching and passing the flow of the purification target gas EG to the gas purifying device 10a or the gas purifying device 10b is provided in a branch part of the exhaust channel 21.

In the gas purifying systems described above, for example, operation conditions of the first electric field forming unit and the second electric field forming unit in each of the gas purifying devices can be set separately for performing operation. Note that the gas purifying devices arranged in series or parallel are not limited to two, and three or more may be arranged. Further, when branched gases are passed simultaneously to the respective gas purifying devices 10a, 10b arranged in parallel, the switching valve 250 may be omitted. The gas purifying devices 10a, 10b arranged in series or parallel may each be formed as, for example, a unit formed of plural stacked unit gas purifying devices. These units may be arranged further in series or parallel. Further, the units may be controlled simultaneously, but separate and independent control of them enables more efficient treatment. Moreover, it is preferable that a residence time of the exhaust gas passing through each of the gas purifying devices 10a, 10b is set in the range of 100 $\mu$sec ($\mu$ seconds) to 1 sec (second).

(Fifth Embodiment)

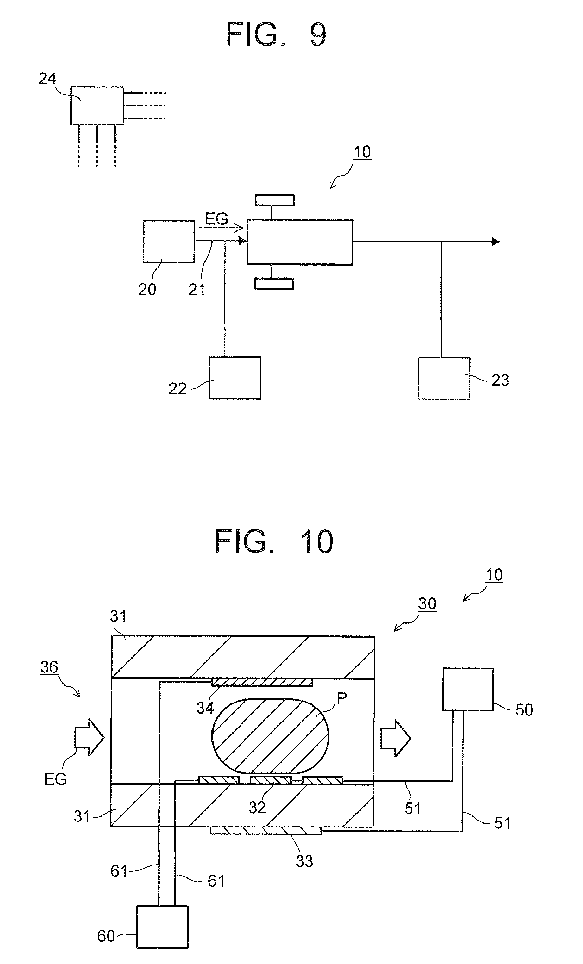

FIG. 9 is a block diagram schematically showing a gas purifying system for describing a gas purifying method for a gas purifying device 10 of a fifth embodiment according to the present invention. FIG. 10 is a view schematically showing a cross section of the gas purifying device 10 of the fifth embodiment according to the present invention. Note that the same parts as those in the structure of the gas purifying devices 10 of the above-described embodiments are given the same reference numerals.

As shown in FIG. 9, the gas purifying device 10 is provided in, for example, an exhaust channel 21 in which a purification target gas EG such as an exhaust gas emitted from the engine 20 of an automobile passes through. Further, a first detecting device 22 which detects information related to burning treatment of particulate matter (PM) is provided upstream of the gas purifying device 10 on the exhaust channel 21. Furthermore, a second detecting device 23 which detects information related to burning treatment of PM is provided downstream of the gas purifying device 10 on the exhaust channel 21. Note that as a device which detects information related to burning treatment of PM, it is sufficient if at least one of the first detecting device 22 and the second detecting device 23 described above is provided. Further, the gas purifying device 10, the first detecting device 22, and the second detecting device 23 are connected electrically to a control unit 24. Incidentally, in FIG. 9, connecting wires between the devices and the control unit 24 are omitted for clarity of the drawing.

Here, the information related to burning treatment of PM includes, for example, at least one of information related to the condition of the gas purifying device 10, such as gas constituents (CO, NOx, HC, $CO_2$, $O_2$, and the like) of the purification target gas EG at entrance, inside, or at exit of the gas purifying device 10 and changes thereof, pressure of the purification target gas EG at entrance, inside, or at exit of the gas purifying device 10, pressure loss in the gas purifying device 10, temperature of the purification target gas EG at entrance, inside, or at exit of the gas purifying device 10 or a change thereof, applied voltage, current, and ratio of applied voltage to current (applied voltage/current) in the first electric field forming unit or the second electric field forming unit, which will be described later, and information related to the condition of the engine such as engine speed, torque, air-fuel ratio, pressure or flow rate of intake air, amount of injection or consumption of fuel, timing of injection, fuel pressure, pressure in engine, opening of intake valve, exhaust valve or EGR valve, engine temperature, and cooling water temperature.

The first detecting device 22 and the second detecting device 23 are formed of, for example, a pressure measuring device measuring the pressure of the purification target gas EG flowing in the exhaust channel 21. Based on a measurement result in this pressure measuring device, a pressure loss value in the gas purifying device 10 can be obtained. Further, the first detecting device 22 and the second detecting device 23 are formed of, for example, a gas constituent analyzing device which analyzes gas constituents of the purification target gas EG emitted from the gas purifying device 10, a temperature measuring device measuring the temperature of the purification target gas EG emitted from the gas purifying device 10, a voltmeter or ammeter measuring an output terminal voltage or current of a discharge power supply driving the first electric field forming unit or the second electric field forming unit, which will be described later, and/or the like. Note that it is sufficient that the first detecting device 22 and the second detecting device 2 3 are formed of at least one of the above-described devices. Further, the gas constituent analyzing device measures concentration of carbon dioxide, hydrocarbon, oxygen, or the like in the purification target gas EG. Further, the above-described voltmeter or ammeter is connected electrically to the discharge power supply 50 of the first electric field forming unit and the dust collection power supply 60 of the second electric field forming unit.

The control unit 24 is formed of, for example, a computer or the like in which a program for controlling operation or the like of the gas purifying device 10 is installed, and includes a predetermined input device, an information processing device, a storage device, a display device, an input/output interface, and the like.

Here, the input device is formed of an input unit such as a keyboard, a pointing device such as a mouse, and/or the like, and accepts input of characters or the like and feeds them to the information processing device. The information processing device has an arithmetic unit such as a CPU performing various arithmetic processing inside, a storage unit formed of a non-volatile memory such as a ROM storing system information and the like and/or a semiconductor memory such as a RAM storing information in an upgradable manner, a control unit taking charge of various operations and transmission/reception of information from/to the outside, and so on. This device performs various processing according to inputs from the input device, contents of the installed program, or the like, and is responsible for a core part for controlling operation or the like of the gas purifying device 10. The storage device is formed of a storage unit such as a hard disk storing information such as files of installed programs, various data files (for example, files of a database managing various data in a database structure), and the like, and keeps retaining such information as long as necessary. The display device is formed of a display unit such as a liquid crystal display, a CRT display, a printer, and/or the like, and displays predetermined information under control by the information processing device. The input/output interface is responsible for input and output of information such as, for example, input of information related to burning treatment of PM from the various measurement devices and the like and information related to the operation condition of the engine, and output of signals for controlling the discharge power supply 50, the dust collection power supply 60, and so on of the gas purifying device 10.

The gas purifying device 10 includes, as shown in FIG. 10, a discharge reaction unit 30 provided in the channel of the purification target gas EG, a discharge power supply 50 connected to this discharge reaction unit 30 via a discharge electrical system 51, and a dust collection power supply 60 connected to the discharge reaction unit 30 via a dust collection electrical system 61.

The discharge reaction unit 30 includes a dielectric 31, discharge electrodes 32, a discharge counter electrode 33 provided to face the discharge electrodes 32 via the dielectric 31, and a dust collection counter electrode 34 provided to face the discharge electrodes 32 via the channel of the purification target gas EG.

The dielectric 31 is, for example, a plate or cylinder formed of a dielectric material, and provided in the channel of the purification target gas EG such as an exhaust gas emitted from the engine of an automobile for example. Accordingly, the purification target gas EG is led into the dielectric 31, thereby forming a gas channel 36 of the purification target gas EG. As the dielectric material here, it is possible to use, for example, resin such as Teflon (registered trademark), epoxy, or Kapton, glass, or ceramic such as alumina or aluminum nitride. Further, use of ceramic is effective when treatment at a high temperature is required, such as when treating an exhaust gas from an actual engine. Considering temperature characteristics of dielectric materials, it is effective to use, in light of power consumption reduction, a material having a small dielectric loss at a high temperature, for example alumina or the like. Particularly, a material having a dielectric loss of $\tan\delta < 0.1$ at 300°C which is measured at 1 kHz allows to obtain favorable purification performance. When the relative dielectric constant of the dielectric 31 is 0.1 to 1000, and the thickness of the dielectric 31 is about 0.01 mm to 10 mm, a creeping discharge which will be described later can be easily ignited.

On inner wall faces of this gas channel 36, the discharge electrodes 32 and the dust collection counter electrode 34 are provided to face each other. The discharge electrodes 32 are arranged for example in a comb-like shape such that plural thin platy electrodes are arranged substantially in parallel at predetermined intervals, each of which has one side joined electrically to the discharge electrical system 51. Then the discharge electrodes 32 are arranged so that each platy electrode is substantially perpendicular to a main flow direction of the purification target gas EG flowing in the gas channel 36. These discharge electrodes 32 are formed of a conductive material having corrosion resistance against the purification target gas EG and heat resistance, and stainless steel or the like is used for example. These discharge electrodes 32 may be formed by, for example, directly printing on an inner wall face of the gas channel 36. Further, the dust collection counter electrode 34 has a plate shape and is formed of, similarly to the discharge electrodes 32, a conductive material having corrosion resistance against the purification target gas EG and heat resistance, such as stainless steel for example. Similarly to the discharge electrodes 32, this dust collection counter electrode 34 may be formed by, for example, directly printing on an inner wall face of the gas channel 36 facing the position where the discharge electrodes 32 are arranged. Further, for providing the discharge electrodes 32 and the dust collection counter electrode 3 4 with corrosion resistance and heat resistance, it is effective to coat the surfaces of metal electrodes with a coating having corrosion resistance and heat resistance. For example, by performing nickel plating or alumina coating with a thickness of 1 $\mu$m to 100 $\mu$m on a stainless or tungsten electrode, for example corrosion in an actual gas environment of an exhaust gas or the like emitted from the engine of an automobile can be suppressed. Further, the direction of the comb-like electrodes may not necessarily be perpendicular to the main flow direction, and may be in a parallel or diagonal direction to the main flow.

Moreover, the discharge counter electrode 33 of the discharge reaction unit 30 is arranged via the dielectric 31, in other words, arranged to face the discharge electrodes 32 across the dielectric 31. The discharge counter electrode 33 is formed of, for example, a thin platy conductive material. Similarly to the discharge electrodes 32, the discharge counter electrode 33 may be formed by directly printing on an outer wall face of the gas channel 36 of the dielectric 31 facing the discharge electrodes 32.

Note that the shapes of the discharge electrodes 32, the discharge counter electrode 33 and the dust collection counter electrode 34 are not limited to the above shapes and are arbitrary. It is preferable that the shape of the discharge electrodes 32 is, for example, linear, dotted, slit, or netted shape, besides the above-described comb-like shape. Using these shapes as the shape of the discharge electrodes 32, electric flux lines in the vicinity of the discharge electrodes 32 become dense, which allow to generate a discharge plasma easily, and thus are effective. Furthermore, a large amount of hazardous substances such as particulate matter (PM) can be caught, and thus hazardous substances, the PM in particular, can be burned and removed efficiently. Further, the shape of the dust collection counter electrode 34 is not limited to the plate shape, and may be slit or netted similarly to the discharge electrodes 32.

Further, one terminal of the discharge power supply 50 is connected to the discharge electrodes 32 of the discharge reaction unit 30 and the other terminal is connected to the discharge counter electrode 33, each via the discharge electrical system 51. The discharge power supply 50 is formed of, for example, primary and secondary power supplies. As the primary power supply, an alternating-current power supply of AC 100 V, $\phi$ 50 Hz or $\phi$ 60 Hz, or a direct-current power supply of DC 12 V or DC 24 V is used. Further, the output voltage of the secondary power supply is, for example, an output voltage having a pulsed (positive polarity, negative polarity, or both positive and negative polarities) or alternating-current (sine wave or intermittent sine wave) waveform. In addition, although the primary power supply and the secondary power supply can be of an integrated structure, use of a power supply such as a battery normally mounted in an automobile as the primary power supply makes it unnecessary to newly dispose the primary power supply, allowing reduction in size of the device. Furthermore, the secondary power supply can be structured including a transformer, and a signal of about a few volts to a few hundred volts shaped by an inverter or the like is increased to an output voltage of a few kilovolts to a few dozen kilovolts by the transformer. To reduce the distance of the high voltage wiring as short as possible, it is desirable to dispose the secondary power supply in the vicinity of the discharge reaction unit 30. Additionally, in the case where the discharge reaction unit 30 turns to a high temperature, or the like, it is preferable that the transformer unit is structured independently from the secondary power supply and only the transformer is disposed in the vicinity of the discharge reaction unit 30, in order to prevent damage by heat to electronic circuits such as inverters.

By applying a voltage of, for example, about a few kilovolts to a few dozen kilovolts between the discharge electrodes 32 and the discharge counter electrode 33 by the discharge power supply 50, an electric field is formed in the gas channel 36 to cause a discharge, and a discharge plasma P is generated in the gas channel 36. At this time, since the dielectric 31 intervenes between the discharge electrodes 32 and the discharge counter electrode 33, and the dielectric 31 is disposed in contact with the discharge electrodes 32, the discharge in the gas channel 36 becomes a creeping discharge formed along the dielectric 31.

The above-described discharge power supply 50, the discharge electrodes 32 and the discharge counter electrode 33 connected with each other via the discharge electrical system 51 form a first electric field forming unit. This first electric field forming unit is responsible for charging of the PM included in the purification target gas EG by action of the discharge plasma and burning treatment for disintegrating and oxidizing the PM.

On the other hand, one terminal of the dust collection power supply 60 is connected to the dust collection counter electrode 34 of the discharge reaction unit 30 and the other terminal is connected to the discharge electrodes 32 of the discharge reaction unit 30, each via the dust collection electrical system 61. The dust collection power supply 60 is formed of, for example, primary and secondary power supplies. As the primary power supply, an alternating-current power supply of AC 100 V, $\phi$ 50 Hz or $\phi$ 60 Hz, or a direct-current power supply of DC 12 V or DC 24 V is used. Further, the output voltage of the secondary power supply is an output voltage having a direct-current (positive polarity, negative polarity, or both positive and negative polarities), a pulsed (positive polarity, negative polarity, or both positive and negative polarities) or a rectified waveform (half-wave rectification waveform or full-wave rectification waveform).

It is structured such that an electric field can be formed in the gas channel 36 by applying a voltage of, for example, about a few kilovolts between the discharge electrodes 32 and the dust collection counter electrode 34 from the dust collection power supply 60. The above-described dust collection power supply 60, the discharge electrodes 32 and the dust collection counter electrode 34 connected with each other via the dust collection electrical system 61 form a second electric field forming unit. This second electric field forming unit is responsible for capturing of the PM charged by an electrical dust collection function and operation of forming an electric field for dust collection to draw the discharge plasma P into the gas channel 36 side. Here, when the voltage V applied between the discharge electrodes 32 and the dust collection counter electrode 34 (distance D) is gradually increased, a space discharge occurs between them and eventually causes sparks. In such a state, electric conductivity in the gas channel increases, and the degree of movement of unipolar charges drawn into the gas channel increases and the charges are absorbed by the discharge electrodes 32 or the dust collection counter electrode 34, making it unable to charge the PM efficiently. To avoid such a state, the voltage V to be applied is preferred to be used in the range that does not cause a discharge spontaneously between the discharge electrodes 32 and the dust collection counter electrode 34. It is preferable that, for example, average electric field intensity defined by V/D is between 1 kV/cm to 30 kV/cm.

Note that the structure of the gas purifying device 10 is shown merely as an example, and is not limited to the above-described structure.

Next, operation of the gas purifying device 10 will be explained.

First, the purification target gas EG such as an exhaust gas emitted from the engine of an automobile or the like flows into between the discharge electrodes 32 and the dust collection counter electrode 34. Here, a pulsed (positive polarity, negative polarity, or both positive and negative polarities), or alternating-current (sine wave or intermittent sine wave) voltage is applied between the discharge electrodes 32 and the discharge counter electrode 33 from the discharge power supply 50. Accordingly, an electric field is formed intensively between the discharge electrodes 32 and the discharge counter electrode 33, particularly in the vicinity of the discharge electrodes 32, to cause a creeping discharge along the dielectric 31, and a discharge plasma P occurs accompanying the creeping discharge.

Here, since the secondary output voltage of the discharge power supply 50 is a pulsed (positive polarity, negative polarity, or both positive and negative polarities) or alternating-current (sine wave or intermittent sine wave) output voltage, intervention of the dielectric 31 does not cause deposition of surface charges on the surface of the dielectric 31 to stop the discharge or cause the discharge to turn to an arc discharge. Thus, an even and stable discharge plasma P occurs.

On the other hand, a voltage having a direct-current (positive polarity, negative polarity, or both positive and negative polarities), a pulsed (positive polarity, negative polarity, or both positive and negative polarities), or a rectified waveform (half-wave rectification waveform or full-wave rectification waveform) is applied between the discharge electrodes 32 and the dust collection counter electrode 34 from the dust collection power supply 60. That is, a voltage that does not change in polarity over time is applied between the discharge electrodes 32 and the dust collection counter electrode 34 from the dust collection power supply 60, forming an even electric field between the discharge electrodes 32 and the dust collection counter electrode 34.

Consequently, by actionof the electric field formed between the discharge electrodes 32 and the dust collection counter electrode 34, the discharge plasma P is drawn largely into the gas channel 36 from the discharge electrodes 32. Then the PM included in the purification target gas EG flowing in the gas channel 36 is charged by collision with electrons and ions generated by the discharge plasma P drawn largely into the gas channel 36. Further, as described above, the discharge plasma P expands across the cross-sectional area of the gas channel 36 by being drawn largely from the discharge electrodes 32 into the gas channel 36, and thus probability to come in contact with the purification target gas EG flowing in the gas channel 36 increases. This increases the ratio of the PM included in the purification target gas EG to be charged.

Further, as described above, since the direction of the electric field formed between the discharge electrodes 32 and the dust collection counter electrode 34 does not change over time due to output voltage characteristics of the dust collection power supply 60, the discharge plasma P drawn into the gas channel 36 becomes a discharge plasma P having either positive or negative polarity. This causes the major part of the PM to be charged positively or negatively. Accordingly, the trace of the charged PM is bent by Coulomb force received from the electric field formed by operation of the second electric field forming unit. The direction of bending is decided by charges included in the PM and the direction of electric field, and thus there occur PM bent toward the discharge electrodes 32 side and PM bent toward the dust collection counter electrode 34 side by the polarity of charges.

Thus, PM on one side charged in the gas channel 36 is attracted to the discharge electrodes 32 side by electric force of the discharge plasma P in addition to the dust collection function of the electric field formed between the discharge electrodes 32 and the dust collection counter electrode 34 by operation of the dust collection power supply 60, and is captured by the surfaces of the discharge electrodes 32 and the surface of the dielectric 31 in the vicinity of the discharge electrodes 32. Further, PM on the other side different in charged polarity from the PM on one side is captured by the surface of the dust collection counter electrode 34 and the surface of the dielectric 31 in the vicinity of the dust collection counter electrode 34. That is, the PM charged either positively or negatively receives electric force in a uniform direction by action of the electric field and the unipolar discharge plasma P, and is captured on the discharge electrodes 32 side or the dust collection counter electrode 34 side.

As described above, the PM that is charged by the discharge plasma P has a sufficient charge amount and receives electric force in a uniform direction by action of the electric field and the unipolar discharge plasma P, and is captured efficiently on the discharge electrodes 32 side or the dust collection counter electrode 34 side. In this manner, the electric field formed by operation of the dust collection power supply 60 has roles of improving charge efficiency for PM in the gas channel 36 due to drawing effect of the discharge plasma P as well as giving electric force to the charged PM to be captured efficiently on the discharge electrodes 32 side or the dust collection counter electrode 34 side. Here, when the voltage V applied between the discharge electrodes 32 and the dust collection counter electrode 34 (distance D) is gradually increased, a space discharge occurs between them and eventually causes sparks. In such a state, electrical conductivity in the gas channel increases, the degree of movement of unipolar charges drawn into the gas channel increases and the charges are absorbed by the discharge electrodes 32 or the dust collection counter electrode 34, making it unable to charge the PM efficiently. To avoid such a state, the voltage V to be applied is preferred to be used in the range that does not cause a discharge spontaneously between the discharge electrodes 32 and the dust collection counter electrode 34. It is preferable that, for example, average electric field intensity defined by V/D is between 1 kV/cm to 30 kV/cm.

Further, in the gas channel 36 in the discharge reaction unit 30, high energy electrons generated by the discharge plasma P collide with the purification target gas EG, thereby generating oxidative radicals such as O, OH, $O_3$, $O^{2-}$ as well as $NO_2$ or the like. The oxidative radicals further react with hydrocarbons in the purification target gas EG and generates other active hydrocarbon molecules. Further, $NO_2$ undergoes a burning reaction with PM to disintegrate and oxidize the PM.

The PM rushed into the discharge plasma P undergoes a burning reaction in stages to be disintegrated and oxidized without treatment such as heating, and finally turns to carbon monoxide, carbon dioxide, and so on. Here, part of the PM rushed into the high-density discharge plasma P disintegrates in the air, and the rest collides with and captured on the surfaces of the discharge electrodes 32 and the surface of the dielectric 31 in the vicinity of the discharge electrodes 32, or the surface of the dust collection counter electrode 34 and the surface of the dielectric 31 in the vicinity of the dust collection counter electrode 34. The PM captured on the surfaces stays for long time in the reaction field with oxidative radicals, undergoes a burning reaction during this period such as disintegration and oxidization in stages due to action of the oxidative radicals without treatment such as heating, and finally turns to carbon monoxide, carbon dioxide, and so on. Thus, the inside of the discharge reaction unit 30 is always kept clean, and thereby it is possible to prevent reduction of the discharge plasma P and deterioration of the electrical dust collection function due to such fouling.

The purification target gas EG from which the PM is thus removed by the discharge reaction unit 30 is exhausted to the outside of the discharge reaction unit 30.

Next, a gas purifying method for the gas purifying device 10 based on the information related to burning treatment of PM will be described.

A burning treatment rate for captured PM changes depending on gas constituents and temperature of the purification target gas EG, constituents of the PM, and the like. The burning treatment rate decreases when oxygen concentration in the purification target gas EG and the temperature of the purification target gas EG are low, or when the ratio of carbon included in the PM is high. If a large amount of PM is captured when the burning treatment rate is low, the capturing rate of PM exceeds the burning treatment rate, and thus the PM deposits on the surfaces of the discharge electrodes 32 and the dust collection counter electrode 34 of the gas purifying device 10, as well as surfaces of the dielectric 31 in the vicinities of these electrodes, causing instability of corona discharge and/or increase in pressure loss in the gas purifying device 10. Here, the burning treatment rate (g/h) for PM refers to the amount of PM removed per unit time. Here, removal of PM refers to that the PM is disintegrated or oxidized to become carbon dioxide, carbon monoxide, and so on, thereby allowing no PM to exist.

Here, when the amount of PM flowing into the gas purifying device 10 is Qi (g/h), capturing efficiency of PM in the gas purifying device 10 is η, and the burning treatment rate is Qb (g/h), performing control so as to satisfy the following expression (1) allows to stably purify the purification target gas EG without allowing the PM to deposit.

$$Qb > \eta \cdot Qi \quad \ldots \text{ expression (1)}$$

Note that "η · Qi" on the right side of expression (1) means the amount of PM captured in a unit time, that is, the capturing rate of PM. Further, for preventing deposition of PM, it is preferable that the burning treatment rate for PM is higher than the capturing rate of PM to satisfy the expression (1), but stable purification of the purification target gas EG can be achieved also when the burning treatment rate for PM and the capturing rate of PM are equal. In addition, the relational expression of (1) needs not to be met all the time. Stable purification is possible when the expression (1) is met as a consequence of integration or average in a long period of time, for example, a period until regular inspection, a time of riding in a car during a day or the like, a period of test mode operation, or the like. For example, there may be set an operation condition such that it is operated for a certain period under a condition that reverses the greater-than sign in the expression (1) to allow deposition of PM, and the expression (1) is met after this period ends. Accordingly, combustion heat of the deposited PM can be used effectively.

The gas purifying method for the gas purifying device 10 according to the present invention controls the operation state of the first electric field forming unit or the second electric field forming unit according to the state of burning treatment of the deposited PM, that is, the state of burning treatment by the first electric field forming unit. Here, since it is difficult to directly measure the burning treatment rate for PM in practice, the information related to burning treatment of PM is employed as an index for evaluating the state of deposition of PM. That is, burning treatment rates for PM associated with the information related to burning treatment of PM shown below are provided as a database, and a burning treatment rate for PM can be obtained from the database by measuring the information related to burning treatment of PM. Incidentally, the database is stored in a storage unit such as a hard disk. As described above, the information related to burning treatment of PM includes, for example, at least one of information related to the condition of the gas purifying device 10 , such as gas constituents (CO, NOx, HC, $CO_2$, $O_2$, and the like) of the purification target gas EG at entrance, inside, or at exit of the gas purifying device 10 and changes thereof, pressure of the purification target gas EG at entrance, inside, or at exit of the gas purifying device 10, pressure loss in the gas purifying device 10, temperature of the purification target gas EG at entrance, inside, or at exit of the gas purifying device 10 or a change thereof, applied voltage, current, and ratio of applied voltage to current (applied voltage/current) in the first electric field forming unit or the second electric field forming unit, which will be described later, and information related to the condition of the engine such as engine speed, torque, air-fuel ratio, pressure or flow rate of intake air, amount of injection or consumption of fuel, timing of injection, fuel pressure, pressure in engine, opening of intake valve, exhaust valve or EGR valve, engine temperature, and cooling water temperature. By the control unit 24 making a determination with reference to the database based on the information related to burning treatment of PM, the operation state of the first electric field forming unit or the second electric field forming unit is controlled. In addition, when the information related to the condition of the gas purifying device 10 is used, passive control to capture a change of the condition of the gas purifying device 10 caused by an exhaust gas emitted from the engine is mainly performed, and when the information related to the condition of the engine is used, active control to predict a change of the condition of the gas purifying device caused by an exhaust gas emitted from the engine is mainly performed. Further, these controls may be combined.

Then the control unit 24 inputs the information related to burning treatment of PM, makes a determination as shown below based on this information so as to control the operation state of the first electric field forming unit or the second electric field forming unit. Note that the description below is an example of determinations, and they are not limited to such determinations.

When based on concentration of a gas constituent change (for example, carbon dioxide or hydrocarbon) of the purification target gas EG at the entrance and exit of the gas purifying device 10, it is determined that the above-described disintegration and oxidation of PM are facilitated and that the PM is not deposited when concentration changes of carbon dioxide and hydrocarbon are equal to or higher than threshold values. In this case, the control unit 24 determines that the burning treatment rate for PM is equal to or higher than the capturing rate of PM. On the other hand, it is determined that the PM is deposited when concentration changes of carbon dioxide and hydrocarbon are lower than the threshold values. In this case, the control unit 24 determines that the burning treatment rate for PM is lower than the capturing rate of PM.

Further, when based on a pressure loss in the gas purifying device 10, it is determined that PM is deposited and narrowing the gas channel 36 when there is a pressure loss equal to or larger than a predetermined value. In this case, the control unit 24 determines that the burning treatment rate for PM is lower than the capturing rate of PM. On the other hand, when the pressure loss is smaller than the predetermined value, the control unit 24 determines that the burning treatment rate for PM is higher than the capturing rate of PM.

Further, when based on a temperature change of the purification target gas EG at the exit of the gas purifying device 10, the control unit 24 determines that the burning treatment rate for PM is higher than the capturing rate of PM when the temperature change of the purification target gas EG is equal to or larger than a predetermined value. On the other hand, when the temperature of the purification target gas EG is smaller than the predetermined value, the control unit 24 determines that the burning treatment rate for PM is lower than the capturing rate of PM.

Further, when based on the ratio of the applied voltage to the current (applied voltage/current) in the first electric field forming unit, the control unit 24 determines that the burning treatment rate for PM is higher than the capturing rate of PM when this ratio is equal to or larger than a predetermined value. On the other hand, when the value of the ratio is smaller than the predetermined value, the control unit 24 determines that the burning treatment rate for PM is lower than the capturing rate of PM.

Further, when based on the ratio of the applied voltage to the current (applied voltage/current) in the second electric field forming unit, the control unit 24 determines that the burning treatment rate for PM is higher than the capturing rate of PM when this ratio is equal to or larger than a predetermined value. On the other hand, when the value of the ratio is smaller than the predetermined value, the control unit 24 determines that the burning treatment rate for PM is lower than the capturing rate of PM.

Hereinafter, examples of the gas purifying method will be described for the case where the expression (1) is not satisfied, that is, the burning treatment rate for PM is lower than the capturing rate of PM and for the case where the expression (1) is satisfied, that is, the burning treatment rate for PM is higher than the capturing rate of PM.

(When the burning treatment rate for PM is lower than the capturing rate of PM)

When the control unit 24 determines that the burning treatment rate for PM is lower than the capturing rate of PM based on the information related to burning treatment of PM, it outputs to the discharge power supply 50 of the first electric field forming unit a signal for adjusting a voltage, frequency, waveform, or the like to the direction to increase the burning treatment rate, and simultaneously outputs to the dust collection power supply 60 of the second electric field forming unit a signal for adjusting a voltage, frequency, waveform, or the like to the direction to lower dust collection efficiency. Here, for example, it is possible to increase the burning treatment rate by increasing the frequency of the discharge power supply 50. Further, for example, it is possible to lower the dust collection efficiency by decreasing the voltage of the dust collection power supply 60.

By performing this control, the relationship of the above-described expression (1) can be satisfied, that is, the burning treatment rate for PM can be made higher than the capturing rate of PM.

(When the burning treatment rate for PM is higher than the capturing rate of PM)

When the control unit 24 determines that the burning treatment rate for PM is higher than the capturing rate of PM based on the information related to burning treatment of PM, it outputs to the discharge power supply 50 of the first electric field forming unit a signal for adjusting a voltage, frequency, waveform, or the like to the direction to decrease the burning treatment rate, and simultaneously outputs to the dust collection power supply 60 of the second electric field forming unit a signal for adjusting a voltage, frequency, waveform, or the like to the direction to increase the dust collection efficiency. Here, for example, it is possible to lower the burning treatment rate by decreasing the frequency of the discharge power supply 50. Further, for example, it is possible to increase the dust collection efficiency by increasing the voltage of the dust collection power supply 60.

Concrete examples of the case where the burning treatment rate for PM thus becomes higher than the capturing rate of PM include the case where the temperature of the purification target gas EG is high, the case where the temperature of a deposition layer increases due to continuous burning of the deposited PM, and the deposition layer itself starts to burn, and the like. In these cases, burning of the PM can continue even when the voltage in the first electric field forming unit is cut off and the power is turned to "0".

As described above, in the gas purifying method for the gas purifying device 10 according to the fifth embodiment, the voltage, frequency, waveform, or the like in the first electric field forming unit and second electric field forming unit can be controlled optimally based on the information related to burning treatment of PM. Thus, the captured PM can be burned efficiently, and the PM can be removed from the purification target gas EG so as to purify the purification target gas EG. Furthermore, it becomes possible to purify the purification target gas EG stably under the condition that there is sharp load fluctuation. In the gas purifying method for the gas purifying device 10 according to the above-described fifth embodiment, the voltage, frequency, waveform, or the like is controlled optimally in the first electric field forming unit and the second electric field forming unit based on the information related to burning treatment of PM, but similar control may be performed using one of information related to state of drawing charges, charging state of PM, and capturing state of PM, instead of the burning treatment rate for PM. Thus, the captured PM can be burned efficiently, and the PM can be removed from the purification target gas EG so as to purify the purification target gas EG. Furthermore, it becomes possible to purify the purification target gas EG stably under the condition that there is sharp load fluctuation. The information related to state of drawing charges, charging state of PM, and capturing state of PM is difficult to be measured directly, similarly to the burning treatment rate for PM. Thus, the information related to state of drawing charges, charging state of PM, and capturing state of PM associated with information shown below is provided as a database, and thereby the burning treatment rate for PM can be obtained from the database by measuring the information below. Incidentally, the database is stored in a storage unit such as a hard disk.

Note that the information shown below is the same as the information related to burning treatment of PM. Specifically, this information includes, for example, at least one of information related to the condition of the gas purifying device 10, such as gas constituents (CO, NOx, HC, $CO_2$, $O_2$, and the like) of the purification target gas EG at entrance, inside, or at exit of the gas purifying device 10 and changes thereof, pressure of the purification target gas EG at entrance, inside, or at exit of the gas purifying device 10, pressure loss in the gas purifying device 10, temperature of the purification target gas EG at entrance, inside, or at exit of the gas purifying device 10 or a change thereof, applied voltage, current, and ratio of applied voltage to current (applied voltage/current) in the first electric field forming unit or the second electric field forming unit, and information related to the condition of the engine such as engine speed, torque, air-fuel ratio, pressure or flowrate of intake air, amount of injection or consumption of fuel, timing of injection, fuel pressure, pressure in engine, opening of intake valve, exhaust valve or EGR valve, engine temperature, and cooling water temperature. By the control unit 24 making a determination with reference to the database based on the aforementioned information, the operation state of the first electric field forming unit or the second electric field forming unit is controlled.

Further, the gas purifying method for the gas purifying device 10 according to the fifth embodiment of the present invention is not limited to the above-described gas purifying method. For example, an additive gas supply unit which supplies an additive gas capable of generating oxidative radicals and a gas constituent analyzing device which detects gas constituents in a purification target gas may be further provided upstream of the first electric field forming unit and the second electric field forming unit. An example of the gas constituent analyzing device is an oxygen concentration detecting device which detects oxygen concentration.

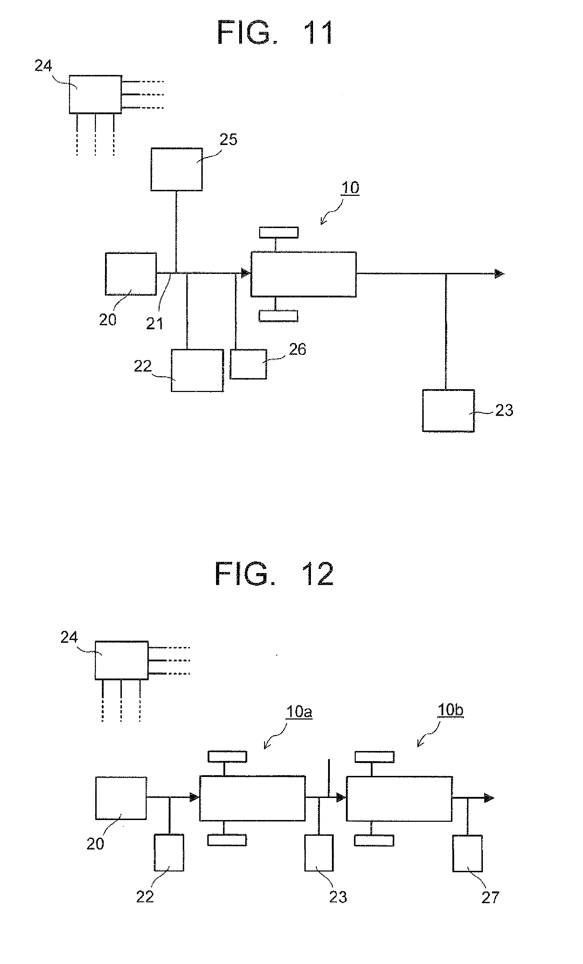

FIG. 11 is a block diagram schematically showing a gas purifying system including an additive gas supply device 25 and an oxygen concentration detecting device 26.

As shown in FIG. 11, in the exhaust channel 21, a position where an additive gas is added by the additive gas supply device 25 is provided upstream of a position where the oxygen concentration detecting device 26 samples the purification target gas EG. Thus, the control unit 24 can input from the oxygen concentration detecting device 26 information related to oxygen concentration in the purification target gas EG after the additive gas is added. Based on this measurement value, the flow rate of the additive gas supplied from the additive gas supply device 25 is controlled.

For example, when the control unit 24 determines that the oxygen concentration has decreased, it outputs a signal for increasing an amount of adding the additive gas to the additive gas supply device 25, and the additive gas supply device 25 increases the amount of adding the additive gas by a method such as opening a valve or starting a pump based on this signal for example. The burning treatment rate for PM is affected by concentration of oxidative radicals such as $0$, $O_3$, and $O^{2-}$ generated by the discharge plasma P. By increase of oxygen concentration in the purification target gas EG and increase of concentration of oxidative radicals, the burning treatment rate can be increased.

Note that the position where the additive gas is added by the additive gas supply device 25 may be provided downstream of the position where the oxygen concentration detecting device 26 samples the purification target gas EG. In this case, the control unit 24 controls the flow rate of an additive gas supplied from the additive gas supply device 25 based on oxygen concentration in the purification target gas EG before adding the additive gas, which is measured by the oxygen concentration detecting device 26.

The additive gas supplied from the additive gas supply device 25 is a gas of oxygen, vapor or the like for example, which is capable of generating the aforementioned oxidative radicals such as O, OH, $O_3$, $O^{2-}$ as well as $NO_2$. This additive gas supply device 25 and the exhaust channel 21 are coupled by a pipe, and the additive gas emitted from the additive gas supply device 25 is added to and mixed in the purification target gas EG flowing in the exhaust channel 21, and flows into the discharge reaction unit 30.

By thus providing the additive gas supply device 25 and the oxygen concentration detecting device 26, oxygen concentration in the purification target gas EG can be set to a predetermined range. Accordingly, the generated amount of oxidative radicals can be increased, and the burning reaction of PMcanbe facilitated. Further, PM captured on the surfaces of the discharge electrodes 32 and the surface of the dielectric 31 in the vicinity of the discharge electrodes 32, or on the surface of the dust collection counter electrode 34 and the surface of the dielectric 31 in the vicinity of the dust collection counter electrode 34 can be more efficiently disintegrated and oxidized to purify the purification target gas. Further, when catalyst layers formed of platinum-based oxidation catalyst, three way catalyst, or the like for example are provided on the surfaces of the discharge electrodes 32 or the surface of the dielectric 31 in the vicinity of the discharge electrodes 32, or on the surface of the dust collection counter electrodes 34 and the surface of the dielectric 31 in the vicinity of the dust collection counter electrode 34, the catalysts absorb oxygen molecules to generate active oxygen for example, and thus it becomes possible to control reaction speed on the catalysts by controlling the oxygen concentration.

(Sixth Embodiment)

As a gas purifying method for a gas purifying device 10 of a sixth embodiment, a gas purifying method in the case where plural gas purifying devices 10 are arranged in series will be described. Note that here the case where two gas purifying devices 10 are arranged in series will be described by way of example.

FIG. 12 is a block diagram schematically showing a gas purifying system for describing the gas purifying method for the gas purifying device 10 of the sixth embodiment according to the present invention. Note that the same parts as those in the gas purifying system of the fifth embodiment will be given the same reference numerals, and overlapping descriptions are omitted or simplified. Further, in FIG. 12, the two gas purifying devices 10 are shown as gas purifying device 10a, gas purifying device 10b, respectively.

As shown in FIG. 12, a purification target gas EG such as an exhaust gas emitted from the engine 20 of an automobile is introduced first to the upstream gas purifying device 10a arranged in series via an exhaust channel 21. Subsequently, the purification target gas EG exhausted from the upstream gas purifying device 10a is introduced into the downstream gas purifying device 10b and exhausted thereafter. Further, first to third detecting devices 23, 24, 27 which detect information related to burning treatment of PM are provided upstream of the gas purifying device 10a on the exhaust channel 21, between the gas purifying device 10a and the gas purifying device 10b, and downstream of the gas purifying device 10b, respectively.

Here, the information related to burning treatment of PM includes, for example, at least one of gas constituent change of the purification target gas EG at entrance and exit of the gas purifying devices 10, pressure loss in the gas purifying devices, temperature changes of the purification target gas at entrance and exit of the gas purifying devices, and ratio of applied voltage to current (applied voltage/current) in the first electric field forming unit or the second electric field forming unit.

The first detecting device 22, the second detecting device 23 and the third detecting device 27 are formed of, for example, a pressure measuring device measuring the pressure of the purification target gas EG flowing in the exhaust channel 21. Based on a measurement result in this pressure measuring device, a pressure loss value in the gas purifying device 10 can be obtained. Further, the first detecting device 22, the second detecting device 23, and the third detecting device 27 are formed of, for example, a gas constituent analyzing device which analyzes gas constituents of the purification target gas EG emitted from the gas purifying device 10, a temperature measuring device measuring the temperature of the purification target gas EG emitted from the gas purifying device 10, a voltmeter or ammeter measuring an output terminal voltage or current of a discharge power supply driving the first electric field forming unit or the second electric field forming unit, and/or the like. Note that it is sufficient that the first detecting device 22, the second detecting device 23, and the third detecting device 27 are formed of at least one of the above-described devices.

Further, the gas constituent analyzing device measures concentration of carbon dioxide, hydrocarbon, oxygen, or the like in the purification target gas EG. Further, the above-described voltmeter or ammeter is connected electrically to the discharge power supply 50 of the first electric field forming unit and the dust collection power supply 60 of the second electric field forming unit. In addition, the gas purifying device 10, the first detecting device 22, the second detecting device 23 and the third detecting device 27 are connected electrically to the control unit 24. Incidentally, in FIG. 12, connecting wires between the devices and the control unit 24 are omitted for clarity of the drawing.

In the gas purifying method for the gas purifying devices 10 of the sixth embodiment, first, the control unit 24 controls the voltage, frequency, waveform and the like in the discharge power supply 50 of the first electric field forming unit and/or the dust collection power supply 60 of the second electric field forming unit of the gas purifying device 10a so that high dust collection efficiency for PM can be obtained in the upstream gas purifying device 10a. This setting of voltage, frequency, waveform, and the like by which high dust collection efficiency for PM can be obtained will be hereinafter referred to as capture mode. Further, the control unit 24 controls the voltage, frequency, waveform and the like in the discharge power supply 50 of the first electric field forming unit and/or the dust collection power supply 60 of the second electric field forming unit of the gas purifying device 10b so that the dust collection efficiency for PM is low and a high burning treatment function can be obtained in the downstream gas purifying device 10b. In this case, burning treatment for disintegrating and oxidizing captured PM is performed mainly. This setting of voltage, frequency, waveform, and the like by which low dust collection efficiency for PM and high burning treatment function can be obtained will be hereinafter referred to as combustion mode.

First, when the purification target gas EG flows into the upstream gas purifying device 10a, mainly the PM included in the purification target gas EG is captured since the gas purifying device 10a is operated in the capture mode. When the control unit 24 determines that, based on the information related to burning treatment of PM in the gas purifying device 10a, it corresponds to a state that for example the pressure loss increases and the above-described burning treatment rate for PM is determined to be lower than the capturing rate of PM, the control unit outputs a signal for switching the operation state of the gas purifying device 10a from the capture mode to the combustion mode to the discharge power supply 50 of the first electric field forming unit and/or the dust collection power supply 60 of the second electric field forming unit of the gas purifying device 10a. Simultaneously with this switching, the control unit 24 outputs a signal for switching the operation state of the downstream gas purifying device 10b from the combustion mode to the capture mode to the discharge power supply 50 of the first electric field forming unit and/or the dust collection power supply 60 of the second electric field forming unit of the gas purifying device 10b.

Thus, in the upstream gas purifying device 10a, the captured PM is burned mainly, and a state is created that the burning treatment rate for PM is higher than the capturing rate of PM, satisfying the above-described expression (1). Then deposited PM gradually disintegrates, oxidizes and decreases, and the surfaces of the discharge electrodes 32 and the surface of the dielectric 31 in the vicinity of the discharge electrodes 32 or the surface of the dust collection counter electrode 34 and the surface of the dielectric 31 in the vicinity of the dust collection counter electrode 34 recover to a state that there is no deposition of PM. Further, most of the PM included in the purification target gas EG flown into the upstream gas purifying device 10a passes as it is through the gas purifying device 10a, and is captured by the downstream gas purifying device 10b.

Subsequently, when the control unit 24 determines that, based on the information related to burning treatment of PM in the downstream gas purifying device 10b, it corresponds to a state that for example the pressure loss increases and the above-described burning treatment rate for PM is determined to be lower than the capturing rate of PM, the control unit outputs a signal for switching the operation state of the gas purifying device 10b from the capture mode to the combustion mode to the discharge power supply 50 of the first electric field forming unit and/or the dust collection power supply 60 of the second electric field forming unit of the gas purifying device 10b. Simultaneously with this switching, the control unit 24 outputs a signal for switching the operation state of the upstream gas purifying device 10a from the combustion mode to the capture mode to the discharge power supply 50 of the first electric field forming unit and/or the dust collection power supply 60 of the second electric field forming unit of the gas purifying device 10a.

Thus, in the downstream gas purifying device 10b, the captured PM is burned mainly, and a state is created that the burning treatment rate for PM is higher than the capturing rate of PM, satisfying the above-described expression (1). Then deposited PM gradually disintegrates, oxidizes and decreases, and the surfaces of the discharge electrodes 32 and the surface of the dielectric 31 in the vicinity of the discharge electrodes 32 or the surface of the dust collection counter electrode 34 and the surface of the dielectric 31 in the vicinity of the dust collection counter electrode 34 recover to a state that there is no deposition of PM. Further, when the purification target gas EG flows into the upstream gas purifying device 10a, mainly the PM included in the purification target gas EG is captured since the gas purifying device 10a is operated in the capture mode.

In operations thereafter, as described above, operations in the capture mode and the combustion mode are repeated in the gas purifying device 10a and the gas purifying device 10b based on the information related to burning treatment of PM.

As described above, in the gas purifying method for the gas purifying devices 10 of the sixth embodiment, plural gas purifying devices are arranged in series, thereby allowing to operate, for example, one gas purifying device in the combustion mode, and another gas purifying device in the capture mode. Accordingly, each of a burning function and a capturing function can be exhibited more efficiently than in an operation combining the burning function and the capturing function in one gas purifying device. Further, based on the information related to burning treatment of PM, it is possible to switch the operation state in each gas purifying device from the combustion mode to the capture mode, or from the capture mode to the combustion mode, and thus purification of the purification target gas EG can be performed stably and continuously as the entire gas purifying system.

Note that the gas purifying method for the gas purifying devices 10 according to the sixth embodiment of the present invention is not limited to the above-described gas purifying method. For example, similarly to the fifth embodiment, an additive gas supply unit which supplies an additive gas capable of generating oxidative radicals and a gas constituent analyzing device which detects gas constituents of a purification target gas may be further provided upstream of the first electric field forming unit and the second electric field forming unit in each of the gas purifying devices 10a, 10b. An example of the gas constituent analyzing device is an oxygen concentration detecting device which detects oxygen concentration.

Here, regarding the burning treatment rate for PM, by increase of oxygen concentration in the purification target gas EG and increase of concentration of oxidative radicals, the burning treatment rate can be increased, and thus it is preferable that the additive gas is supplied particularly to the gas purifying device in a state of the combustion mode.

By thus providing the additive gas supply device and the oxygen concentration detecting device, oxygen concentration in the purification target gas EG can be set to a predetermined range. Accordingly, the generated amount of oxidative radicals can be increased, and the burning reaction of PM c an be facilitated. Further, PM captured on the surfaces of the discharge electrodes 32 and the surface of the dielectric 31 in the vicinity of the discharge electrodes 32, or on the surface of the dust collection counter electrode 34 and the surface of the dielectric 31 in the vicinity of the dust collection counter electrode 34 can be more efficiently disintegrated and oxidized to purify the purification target gas. Further, when catalyst layers formed of platinum-based oxidation catalyst, three way catalyst, or the like for example are provided on the surfaces of the discharge electrodes 32 or the surface of the dielectric 31 in the vicinity of the discharge electrodes 32, or on the surface of the dust collection counter electrodes 34 and the surface of the dielectric 31 in the vicinity of the dust collection counter electrode 34, the catalysts absorb oxygen molecules to generate active oxygen for example, and thus it becomes possible to control reaction speed on the catalysts by controlling the oxygen concentration.

Further, in the above-described gas purifying method, for example, operation conditions of the first electric field forming unit and the second electric field forming unit in each of the gas purifying devices 10a, 10b can be set separately for performing operation. Note that the gas purifying devices arranged in series are not limited to two, and three or more may be arranged. The gas purifying devices 10a, 10b arranged in series may each be formed as, for example, a unit formed of plural stacked unit gas purifying devices. These units may be arranged further in series or parallel. Further, the units may be controlled simultaneously, but separate and independent control of them enables more efficient treatment.

(Seventh Embodiment)

As a gas purifying method for a gas purifying device 10 of a seventh embodiment, a gas purifying method in the case where plural gas purifying devices 10 are arranged in parallel will be described. Note that here the case where two gas purifying devices 10 are arranged in parallel will be described by way of example.

FIG. 13 is a block diagram schematically showing a gas purifying system for describing the gas purifying method for the gas purifying device 10 of the seventh embodiment according to the present invention. Note that the same parts as those in the gas purifying system of the fifth embodiment will be given the same reference numerals, and overlapping descriptions are omitted or simplified. Further, in FIG. 13, the two gas purifying devices 10 are shown as gas purifying device 10a, gas purifying device 10b, respectively.

As shown in FIG. 13, a purification target gas EG such an as exhaust gas emitted from the engine 20 of an automobile passes through an exhaust channel 21 and further through either of branched exhaust channels 21a, 21b branched from the exhaust channel 21, and is introduced into the gas purifying device 10a or the gas purifying device 10b and exhausted thereafter. Further, a switching valve 70 for switching and passing the flow of the purification target gas EG to the gas purifying device 10a or the gas purifying device 10b is provided in a branch part of the exhaust channel 21. In addition, a first detecting device 22 and a second detecting device 23 which detect information related to burning treatment of PM are provided upstream and downstream respectively of the gas purifying devices 10a, 10b on the branched exhaust channel 21a.

Here, the information related to burning treatment of PM includes, for example, at least one of gas constituent change of the purification target gas EG at entrance and exit of the gas purifying devices 10, pressure loss in the gas purifying devices, temperature changes of the purification target gas at entrance and exit of the gas purifying devices, and ratio of applied voltage to current (applied voltage/current) in the first electric field forming unit or the second electric field forming unit.

In addition, the gas purifying devices 10, the first detecting device 22, the second detecting device 23 and the switching valve 70 are electrically connected to the control unit 24. Incidentally, in FIG. 13, connecting wires between the devices and the control unit 24 are omitted for clarity of the drawing.

In the gas purifying method for the gas purifying devices 10 of the seventh embodiment, the control unit 24 first controls the switching valve 70 to create a state that the purification target gas EG flows only into one gas purifying device 10a. Further, the control unit 24 outputs a signal for turning the operation state to the capture mode in the one gas purifying device 10a, to which the purification target gas EG is allowed to flow, to the discharge power supply 50 of the first electric field forming unit and/or the dust collection power supply 60 of the second electric field forming unit of the gas purifying device 10a. On the other hand, the control unit 24 outputs a signal for turning the operation state to the combustion mode in the other gas purifying device 10b, to which the purification target gas EG is not allowed to flow, to the discharge power supply 50 of the first electric field forming unit and/or the dust collection power supply 60 of the second electric field forming unit of the gas purifying device 10b.

First, when the purification target gas EG flows into the one gas purifying device 10a, mainly the PM included in the purification target gas EG is captured since the gas purifying device 10a is operated in the capture mode. When the control unit 24 determines that, based on the information related to burning treatment of PM in the gas purifying device 10a, it corresponds to a state that for example the pressure loss increases and the above-described burning treatment rate for PM is determined to be lower than the capturing rate of PM, the control unit outputs a signal for switching the operation state of the gas purifying device 10a from the capture mode to the combustion mode to the discharge power supply 50 of the first electric field forming unit and/or the dust collection power supply 60 of the second electric field forming unit of the gas purifying device 10a. Simultaneously with this switching, the control unit 24 controls the switching valve 70 to create a state that the purification target gas EG flows into only the other gas purifying device 10b, and further outputs a signal for switching the operation state of the other gas purifying device 10b from the combustion mode to the capture mode to the discharge power supply 50 of the first electric field forming unit and/or the dust collection power supply 60 of the second electric field forming unit of the gas purifying device 10b.

Thus, in the one gas purifying device 10a, the captured PM is burned, and a state is created that the burning treatment rate for PM is higher than the capturing rate of PM, satisfying the above-described expression (1). Incidentally, since the purification target gas EG is not supplied to the one gas purifying device 10a, the amount $Q_i$ of PM flowing into the gas purifying device 10a is actually "0" in the expression (1). Then deposited PM gradually disintegrates, oxidizes and decreases, and the surfaces of the discharge electrodes 32 and the surface of the dielectric 31 in the vicinity of the discharge electrodes 32 or the surface of the dust collection counter electrode 34 and the surface of the dielectric 31 in the vicinity of the dust collection counter electrode 34 recover to a state that there is no deposition of PM. Further, the PM included in the purification target gas EG flown into the other gas purifying device 10b is captured by the other gas purifying device 10b operated in the capture mode.

Subsequently, when the control unit 24 determines that, based on the information related to burning treatment of PM in the other gas purifying device 10b, it corresponds to a state that for example the pressure loss increases and the above-described burning treatment rate for PM is determined to be lower than the capturing rate of PM, the control unit outputs a signal for switching the operation state of the gas purifying device 10b from the capture mode to the combustion mode to the discharge power supply 50 of the first electric field forming unit and/or the dust collection power supply 60 of the second electric field forming unit of the gas purifying device 10b. Simultaneously with this switching, the control unit 24 controls the switching valve 70 to create a state that the purification target gas EG flows into only the one gas purifying device 10a, and outputs a signal for switching the operation state of the one gas purifying device 10a from the combustion mode to the capture mode to the discharge power supply 50 of the first electric field forming unit and/or the dust collection power supply 60 of the second electric field forming unit of the gas purifying device 10a.

Thus, in the other gas purifying device 10b the captured PM is burned mainly, and a state is created that the burning treatment rate for PM is higher than the capturing rate of PM, satisfying the above-described expression (1). Incidentally, since the purification target gas EG is not supplied to the other gas purifying device 10b, the amount $Q_i$ of

PM flowing into the gas purifying device 10b is actually "0" in the expression (1). Then deposited PM gradually disintegrates, oxidizes and decreases, and the surfaces of the discharge electrodes 32 and the surface of the dielectric 31 in the vicinity of the discharge electrodes 32 or the surface of the dust collection counter electrode 34 and the surface of the dielectric 31 in the vicinity of the dust collection counter electrode 34 recover to a state that there is no deposition of PM. Further, the PM included in the purification target gas EG flown into the one gas purifying device 10a is captured by the one gas purifying device 10a operated in the capture mode.

In operations thereafter, as described above, operations in the capture mode and the combustion mode are repeated in the gas purifying device 10a and the gas purifying device 10b based on the information related to burning treatment of PM.

As described above, in the gas purifying method for the gas purifying devices 10 of the seventh embodiment, plural gas purifying devices are arranged in parallel, thereby allowing to operate, for example, one gas purifying device in the combustion mode, and another gas purifying device in the capture mode. Accordingly, each of a burning function and a capturing function can be exhibited more efficiently than in an operation combining the burning function and the capturing function in one gas purifying device. Further, based on the information related to burning treatment of PM, it is possible to switch the operation state in each gas purifying device from the combustion mode to the capture mode, or from the capture mode to the combustion mode, and thus purification of the purification target gas EG can be performed stably and continuously as the entire gas purifying system.

Note that the gas purifying method for the gas purifying devices 10 according to the seventh embodiment of the present invention is not limited to the above-described gas purifying method. For example, similarly to the fifth embodiment, an additive gas supply unit which supplies an additive gas capable of generating oxidative radicals and a gas constituent analyzing device which detects gas constituents of a purification target gas may be further provided upstream of the first electric field forming unit and the second electric field forming unit in each of the gas purifying devices 10a, 10b. An example of the gas constituent analyzing device is an oxygen concentration detecting device which detects oxygen concentration.

Here, regarding the burning treatment rate for PM, by increase of oxygen concentration in the purification target gas EG and increase of concentration of oxidative radicals, the burning treatment rate can be increased, and thus it is preferable that the additive gas is supplied particularly to the gas purifying device in a state of the combustion mode.

By thus providing the additive gas supply device and the oxygen concentration detecting device, oxygen concentration in the purification target gas EG can be set to a predetermined range. Accordingly, the generated amount of oxidative radicals can be increased, and the burning reaction of PM can be facilitated. Further, PM captured on the surfaces of the discharge electrodes 32 and the surface of the dielectric 31 in the vicinity of the discharge electrodes 32, or on the surface of the dust collection counter electrode 34 and the surface of the dielectric 31 in the vicinity of the dust collection counter electrode 34 can be more efficiently disintegrated and oxidized to purify the purification target gas. Further, when catalyst layers formed of platinum-based oxidation catalyst, three way catalyst, or the like for example are provided on the surfaces of the discharge electrodes 32 or the surface of the dielectric 31 in the vicinity of the discharge electrodes 32, or on the surface of the dust collection counter electrodes 34 and the surface of the dielectric 31 in the vicinity of the dust collection counter electrode 34, the catalysts absorb oxygen molecules to generate active oxygen for example, and thus it becomes possible to control reaction speed on the catalysts by controlling the oxygen concentration.

Further, in the above-described gas purifying method, for example, operation conditions of the first electric field forming unit and the second electric field forming unit in each of the gas purifying devices 10a, 10b can be set separately for performing operation. Note that the gas purifying devices arranged in parallel are not limited to two, and three or more may be arranged. Further, when branched gases are passed simultaneously to the respective gas purifying devices 10a, 10b arranged in parallel, the switching valve 70 may be omitted. The gas purifying devices 10a, 10b arranged in parallel may each be formed as, for example, a unit formed of plural stacked unit gas purifying devices. These units may be arranged further in series or parallel. Further, the units may be controlled simultaneously, but separate and independent control of them enables more efficient treatment.

(Eighth Embodiment)

FIG. 14 is a view schematically showing a cross section of a gas purifying device 10 of an eighth embodiment according to the present invention. Note that the same parts as those in the structure of the gas purifying devices 10 of the above-described embodiments are given the same reference numerals.

In the gas purifying device 10 shown in FIG. 14, plural groups, for example two groups of discharge electrodes 32a, 32b and discharge counter electrodes 33a, 33b facing each other are provided, instead of providing the dust collection counter electrode 34 in the gas purifying devices 10 in the above-described embodiments. The gas purifying device 10 shown in FIG. 14 is an example in which two groups of discharge electrodes 32a, 32b and discharge counter electrodes 33a, 33b facing each other are provided, instead of providing the dust collection counter electrode 34 in the gas purifying device 10 of the fifth embodiment shown in FIG. 10. Note that the gas purifying device 10 shown in FIG. 14 will be described as an example here, but plural groups, for example two groups of discharge electrodes 32a, 32b and discharge counter electrodes 33a, 33b facing each other may be provided, instead of providing the dust collection counter electrode 34 in the gas purifying device 10 in another embodiment. This allows to obtain operation and effect similar to those of the gas purifying device 10 in this example.

In the gas purifying device 10, a dielectric 31 having a platy or cylindrical structure for example forms a gas channel 36. On the gas channel 36 side of the dielectric 31, plural groups, for example two groups of discharge electrodes 32a, 32b (first discharge electrodes 32a and second discharge electrodes 32b) are provided. On the other hand, on the side of the dielectric 31 reverse of the gas channel 36, two groups of discharge counter electrodes 33a, 33b (first discharge counter electrode 33a and second discharge counter electrode 33b) are provided. The first discharge electrodes 32a and the second discharge electrodes 32b are provided in contact with the dielectric 31 to face each other across the gas channel 36. Furthermore, the first discharge counter electrodes 33a are arranged at a position facing the first discharge electrodes 32a across the dielectric 31, and the second discharge counter electrodes 33b are arranged at a position facing the second discharge electrodes 32b across the dielectric 31.

Further, the first discharge electrodes 32a and the first discharge counter electrodes 33a are connected to a first discharge power supply 50a via a discharge electrical system 51a. They are structured such that, by applying a pulsed, alternating-current or bipolar pulsed voltage between the first discharge electrodes 32a and the first discharge counter electrodes 33a by the first discharge power supply 50a, an electric field for discharge is formed to cause a discharge to thereby allow generation of a discharge plasma P1.

Similarly, the second discharge electrodes 32b and the second discharge counter electrodes 33b are connected to a second discharge power supply 50b via a discharge electrical system 51b. They are structured such that, by applying a pulsed, alternating-current or bipolar pulsed voltage between the second discharge electrodes 32b and the second discharge counter electrodes 33b by the second discharge power supply 50b, an electric field for discharge is formed to cause a discharge to thereby allow generation of a discharge plasma P2. The above-described discharge power supplies 50a, 50b, discharge electrodes 32a, 32b and discharge counter electrodes 33a, 33b, which are connected with each other via the discharge electrical systems 51a, 51b, form a first electric field forming unit.

At this time, the dielectric 31 exists between the first discharge electrodes 32a and the first discharge counter electrodes 33a, and the first discharge electrodes 32a are in close contact with the dielectric 31. Thus, the discharge caused is a stable corona discharge, which becomes a creeping discharge along the dielectric 31 in the vicinity of the first discharge electrodes 32a. The discharge caused by the second discharge electrodes 32b is also the same.

Furthermore, the first discharge electrodes 32a and the second discharge electrodes 32b are each connected to the dust collection power supply 60 via the dust collection electrical system 61, and are structured such that, by applying a direct-current, unipolar voltage having a pulsed, rectified waveform between the first discharge electrodes 32a and the second discharge electrodes 32b by the dust collection power supply 60, an electric field for dust collection in a constant direction over time can be formed. The above-described dust collection power supply 60 and discharge electrodes 32a, 32b connected via the dust collection electrical system 61 form a second electric field forming unit.

Accordingly, in respective discharge plasmas P1 generated in the vicinity of the first discharge electrodes 32a and the vicinity of the second discharge electrodes 32b by action of the electric field for dust collection, a discharge plasma P1 having negative charges or positive charges is drawn to the gas channel 36 side. Incidentally, at this time, since the electric field, which is for dust collection and is also used for drawing out the discharge plasmas P1, is in a constant direction, the discharge plasmas P1 drawn out to the gas channel 36 side become reverse in polarity to each other.

Then PM charged by the discharge plasmas P1 receives electrical force in a direction according to the polarity by the electrical dust collection effect of the electric field for dust collection formed between the first discharge electrodes 32a and the second discharge electrodes 32b, and is thereby captured by the dielectric 31, the first discharge electrodes 32a and the second discharge electrodes 32b. Furthermore, the captured PM is burned by the discharge plasmas P1 generated by creeping discharges in the vicinities of the first discharge electrodes 32a and the second discharge electrodes 32b.

In other words, the gas purifying device 10 has a structure such that, by arranging the two groups of discharge electrodes 32a, 32b to face each other for forming the electric field for dust collection, the discharge electrodes 32a, 32b combine a function as the dust collection counter electrode 34 for each other, which is a component of the second electric field forming unit in the gas purifying device 10 shown in FIG. 10.

Thus, with the gas purifying device 10, besides the effect in the gas purifying device 10 shown in FIG. 10, the discharge plasmas P1 can be generated in a wider range in the vicinities of surfaces on the gas channel 36 side of the dielectric 31. For example, when there are two discharge electrodes as shown in FIG. 14, it is possible to generate the discharge plasmas P1, P2 at two positions, and thus the PM captured on each portion of the dielectric 31 can be burned more effectively.

Particularly, in the gas purifying device 10 shown in FIG. 10 for example, when charges in a discharge plasma P are unipolar and generated from one position, PM charged in the same polarity as that of the discharge plasma P is attracted to the side where no discharge plasma P is formed and captured there. In this case, it is possible that the captured PM will not be burned sufficiently. In practice, the present inventors have recognized by experiment that major part of PM flown in may adhere to the face on the side facing the discharge plasma P.

On the other hand, with the gas purifying device 10, when the PM receives electrical force in ether direction and captured by the dielectric 31, the PM can be burned by the discharge plasmas P1, P2.

Furthermore, in the gas purifying device 10, when voltage application for forming the electric field for discharge, that is, voltage application between the first discharge electrodes 32a and the first discharge counter electrodes 33a and voltage application between the second discharge electrodes 32b and the second discharge counter electrodes 33b are performed by switching alternately and intermittently, the PM can be removed more efficiently.

Specifically, if voltage application between the first discharge electrodes 32a and the first discharge counter electrodes 33a and voltage application between the second discharge electrodes 32b and the second discharge counter electrodes 33b are performed simultaneously, the discharge plasmas P1, P2 are generated simultaneously from the first discharge electrodes 32a and the second discharge electrodes 32b respectively. However, the discharge plasmas P1, P2 are different in polarity from each other, so in a center part of the gas channel 36, the discharge plasmas P1, P2 having both polarities are present in mixture. Also in the vicinities of the first discharge electrodes 3 2 a and the second discharge electrodes 32b, the discharge plasmas P1, P2 having both polarities are present in mixture in portions where the influence of the electric field for dust collection is small.

Thus, when a large voltage is applied for discharge, and amounts of the discharge plasmas P1, P2 are so large as to have inf luence on electrical dust collection effect by the electric field for dust collection, it is possible that movement of charged PM is hindered in regions where the discharge plasmas P1, P2 having both polarities are present in mixture. Particularly in the vicinities of the first discharge electrodes 32a and the second discharge electrodes 32b, the discharge plasmas P1, P2 having both polarities are generated by larger amounts, and it is highly possible that movement of PM attracted to the vicinity of the dielectric 31 is hindered. Accordingly, when a discharge is performed by switching to one of the discharge electrodes 32a, 32b, such hindrance of dust collection for PM can be avoided even when a larger voltage is applied for discharge.

In addition, the first discharge power supply 50a and the second discharge power supply 50b may be a common one, using a single discharge power supply for performing voltage application between the first discharge electrodes 32a and the first discharge counter electrodes 33a and voltage application between the second discharge electrodes 32b and the second discharge counter electrodes 33b. Further, respective output voltages of the first discharge power supply 50a and the second discharge power supply 50b may be the same or different ones.

Next, a gas purifying method for the gas purifying device 10 of the above-described eighth embodiment will be described. A gas purifying system for describing this gas purifying method has the same structure as the gas purifying system shown in FIG. 9, and thus it will be described with reference to FIG. 9. Further, the same parts as those in the structure of the gas purifying system for describing the gas purifying method for the gas purifying device 10 of the fifth embodiment are given the same reference numerals, and overlapping descriptions are omitted or simplified.

Note that although the gas purifying method for the gas purifying device 10 of the eighth embodiment will be described here, but with the gas purifying devices 10 in other embodiments, operation and effect similar to those in the gas purifying method for the gas purifying device 10 of the eighth embodiment can be obtained by making a similar gas purifying system.

As shown in FIG. 9, the gas purifying device 10 of the eighth embodiment is provided in, for example, an exhaust channel 21 in which a purification target gas EG such as an exhaust gas emitted from the engine 20 of an automobile passes through. Further, a first detecting device 22 which detects information related to burning treatment of particulate matter (PM) is provided upstream of the gas purifying device 10 on the exhaust channel 21. Furthermore, a second detecting device 23 which detects information related to burning treatment of PM is provided downstream of the gas purifying device 10 on the exhaust channel 21. Note that as a device which detects information related to burning treatment of PM, it is sufficient if at least one of the first detecting device 22 and the second detecting device 23 described above is provided. Further, the gas purifying device 10, the first detecting device 22, and the second detecting device 23 are connected electrically to a control unit 24. Incidentally, in FIG. 9, connecting wires between the devices and the control unit 24 are omitted for clarity of the drawing.

In this gas purifying system, switching one to the other for operation is possible between the first electric field forming unit formed of the discharge power supply 50a, the discharge electrodes 32a and the discharge counter electrodes 33a connected to each other via the discharge electrical system 51a and the first electric field forming unit formed of the discharge power supply 50b, the discharge electrodes 32b and the discharge counter electrodes 33b connected to each other via the discharge electrical system 51b. Here, switching may be performed either by switching operation and stop of the discharge power supply 50a and the discharge power supply 50b alternately, or by switching applied voltages and applied frequencies in the discharge power supply 50a and the discharge power supply 50b while keeping them operating. In other words, it is sufficient if there is created a state that a difference is made between charge amounts of a discharge plasma P1 and a discharge plasma P2 which are different in polarity.

Here, timing of switching may be determined us ing the amount Qi (g/h) of PM flowing into the gas purifying device 10, capturing efficiency η of PM, and the burning treatment rate Qb (g/h) in the gas purifying device 10. Incidentally, switching and control of the above-described two first electric field forming units and control of the second electric field forming units are performed by the control unit 24.

For example, during time t1 in which the discharge power supply 50a is operated and the discharge power supply 50b is stopped, PM adhering to the surfaces of the discharge electrodes 32b deposit thereon without burning. When the amount of this deposition of PM becomes too large, it is possible that an electric field cannot be applied effectively and hence a discharge cannot be started, since the discharge electrodes 32b are covered by PM when the discharge power supply 50b is operated after switching. The amount of deposition of PM is proportional to the value of "η × Qi × t1", and thus incapability of performing a discharge at the beginning of the discharge can be avoided by deciding t1 so that this value becomes equal to or smaller than a constant value and then performing switching of operation and stop. Thus, stable control becomes possible.

Subsequently, the operation states of the discharge power supplies are switched, and it is necessary to burn the deposited PM during time t2 in which the discharge power supply 50b is operated and the discharge power supply 50a is stopped. Thus, t2 is set so that the value of "Qb × t2" becomes larger than the value of "η × Qi × t1".

Here, since it is impossible to directly measure Qi and Qb in practice, information of Qi and Qb associated with the information shown below is provided as a database, and thereby Qi and Qb can be obtained from the database by measuring the following information. Incidentally, the database is stored in a storage unit such as a hard disk. Further, the information shown below are the same as the above-described information related to burning treatment of PM. Specifically, this information includes, for example, at least one of information related to the condition of the gas purifying device 10, such as gas constituents (CO, NOx, HC, $CO_2$, $O_2$, and the like) of the purification target gas EG at entrance, inside, or at exit of the gas purifying device 10 and changes thereof, pressure of the purification target gas EG at entrance, inside, or at exit of the gas purifying device 10, pressure loss in the gas purifying device 10, temperature of the purification target gas EG at entrance, inside, or at exit of the gas purifying device 10 or a change thereof, applied voltage, current, and ratio of applied voltage to current (applied voltage/current) in the first electric field forming unit or the second electric field forming unit, and information related to the condition of the engine such as engine speed, torque, air-fuel ratio, pressure or flow rate of intake air, amount of injection or consumption of fuel, timing of injection, fuel pressure, pressure in engine, opening of intake valve, exhaust valve or EGR valve, engine temperature, and cooling water temperature. By the control unit 24 making a determination with reference to the database based on the aforementioned information, the operation state of the first electric field forming unit or the second electric field forming unit is controlled. In addition, when the information related to the condition of the gas purifying device 10 is used, passive control to capture a change of the condition of the gas purifying device 10 caused by an exhaust gas emitted from the engine is mainly performed, and when the information related to the condition of the engine is used, active control to predict a change of the condition of the gas purifying device caused by an exhaust gas emitted from the engine is mainly performed. Further, these controls may be combined.

Further, when electrode surfaces are coated with dielectrics for the purpose of improving heat resistance and corrosion resistance on the surfaces of the discharge electrodes 32a, 32b, switching control from a different aspect is effective.

When the discharge power supply 50a is operated and the discharge power supply 50b is stopped in the case where the discharge electrodes 32a, 32b are coated with dielectrics, charges are accumulated on the dielectric surfaces when charges drawn out from a discharge plasma P1 and charges adhering to PM reach the surfaces of the discharge electrodes 32b by an electric field created by the second electric field forming unit. The electric field created by the second electric field forming unit is canceled out by an electric field created by these accumulated charges, and it becomes not possible over time to exhibit effect of the electric field created by the second electric field forming unit. When the discharge power supply 50b is operated and the discharge power supply 50a is stopped in this state, a discharge plasma P2 generated in the vicinity of the discharge electrodes 32b attenuates the accumulated charges, and it becomes possible again to exhibit the effect of the electric field created by the second electric field forming unit.

On the other hand, subsequently, accumulation of charges begins on the discharge electrodes 32a side, and it becomes not possible over time to exhibit effect of the electric field created by the second electric field forming unit. Accordingly, by switching operation and stop of the discharge power supply 50a and the discharge power supply 50b at time intervals by which the effect of the electric field created by the second electric field forming unit will not be impaired, the effect of the electric field created by the second electric field forming unit can be exhibited sufficiently, and a favorable treatment condition can be maintained continuously. The measurement of the accumulation rate of charges is possible by measuring the current flowing into the second electric field forming unit, and the control unit 24 can control the timing of switching the power supplies by inputting this information to the control unit 24. In practice, without directly measuring the current flowing into the second electric field forming unit, one of the aforementioned information related to burning treatment of PM can be used to identify the current flowing into the second electric field forming unit so as to control timing of switching the power supplies.

As described above, in the gas purifying device 10 of the eighth embodiment according to the present invention, plural groups, for example two groups of discharge electrodes 32a, 32b and discharge counter electrodes 33a, 33b facing each other are provided, thereby allowing switching of operation and stop of the discharge power supply 50a and the discharge power supply 50b. Thus, the PM can be captured and removed more efficiently.

In the foregoing, the present invention has been explained specifically by one embodiment, but the present invention is not limited to these embodiments, and can be changed in various ways without departing from the spirit thereof. Moreover, the gas purifying device, the gas purifying system and the gas purifying method according to the present invention can be applied to general types of motors that emit an exhaust gas including PM, other than applying to an exhaust channel of an automobile.

Industrial Applicability

With a gas purifying device, a gas purifying system and a gas purifying method according to aspects of the present invention, PM included in an exhaust gas can be captured efficiently, and the captured PM can be removed efficiently without heating, so as to purify a purification target gas. The gas purifying device, the gas purifying system and the gas purifying method according to the aspects of the present invention can be used effectively to general types of motors which emit an exhaust gas including PM, other than applying to an exhaust channel of an automobile.

**Claims**

1. A gas purifying device having a first electric field forming unit which forms an electric field for discharge in a gas channel in which a purification target gas flows to generate a discharge plasma, and charges and burns particulate matter included in the purification target gas by action of the discharge plasma, and a second electric field forming unit which forms an electric field for dust collection to capture the charged particulate matter by an electrical dust collection function and draw out the discharge plasma to the gas channel side,
   the device, comprising,
   a charge electrode for charging a flowing purification target gas, which is disposed on an upstream side of positions where the first electric field forming unit and the second electric field forming unit are disposed.

2. The gas purifying device according to claim 1,
   wherein the charge electrode is disposed in a direction substantially perpendicular to a main flow direction of the purification target gas.

3. The gas purifying device according to claim 1, further comprising,
   a plurality of the charge electrodes disposed at predetermined intervals.

4. A gas purifying device having a first electric field forming unit which forms an electric field for discharge in a gas channel in which a purification target gas flows to generate a discharge plasma, and charges and burns particulate matter included in the purification target gas by action of the discharge plasma, and a second electric field forming unit which forms an electric field for dust collection to capture the charged particulate matter by an electrical dust collection function and draw out the discharge plasma to the gas channel side,
   wherein at least one of an inner wall face of the gas channel on a side where the first electric field forming unit is disposed, an inner wall face of the gas channel on a side where the second electric field forming unit is disposed, a discharge electrode forming the first electric field forming unit, and a dust collection electrode forming the second electric field forming unit has a surface formed of a recess and projection face.

5. The gas purifying device according to claim 4,
   wherein recesses and projections of the recess and projection face are formed along a main flow direction of the purification target gas.

6. The gas purifying device according to claim 4,
   wherein recesses and projections of the recess and projection face are formed along a direction substantially perpendicular to a main flow direction of the purification target gas.

7. A gas purifying device having a first electric field forming unit which forms an electric field for discharge in a gas channel in which a purification target gas flows to generate a discharge plasma, and charges and burns particulate matter included in the purification target gas by action of the discharge plasma, and a second electric field forming unit which forms an electric field for dust collection to capture the charged particulate matter by an electrical dust collection function and draw out the discharge plasma to the gas channel side,

wherein a catalyst layer is formed on a surface of at least one of an inner wall face of the gas channel on a side where the first electric field forming unit is disposed, an inner wall face of the gas channel on a side where the second electric field forming unit is disposed, a discharge electrode forming the first electric field forming unit, and a dust collection electrode forming the second electric field forming unit.

8. The gas purifying device according to claim 7,
wherein the catalyst layer is formed of a coating layer of a catalyst material coated on the surface.

9. The gas purifying device according to claim 7,
wherein the catalyst layer is formed of a porous layer carrying a catalyst material disposed on the surface.

10. A gas purifying device having a first electric field forming unit which forms an electric field for discharge in a gas channel in which a purification target gas flows to generate a discharge plasma, and charges and burns particulate matter included in the purification target gas by action of the discharge plasma, and a second electric field forming unit which forms an electric field for dust collection to capture the charged particulate matter by an electrical dust collection function and draw out the discharge plasma to the gas channel side,
the device, comprising,
an additive gas supply unit which supplies an additive gas capable of generating oxidative radicals on an upstream side of positions where the first electric field forming unit and the second electric field forming unit are disposed.

11. A gas purifying system, comprising,
at least two gas purifying devices according to claim 1 arranged in series or parallel.

12. A gas purifying system, comprising,
at least two gas purifying devices according to claim 4 arranged in series or parallel.

13. A gas purifying system, comprising,
at least two gas purifying devices according to claim 7 arranged in series or parallel.

14. A gas purifying system, comprising,
at least two gas purifying devices according to claim 10 arranged in series or parallel.

15. The gas purifying system according to claim 11, further comprising,
a switching valve capable of switching and introducing a flow of a purification target gas to each of the gas purifying devices, when the gas purifying devices are arranged in parallel.

16. The gas purifying system according to claim 12, further comprising,
a switching valve capable of switching and introducing a flow of a purification target gas to each of the gas purifying devices, when the gas purifying devices are arranged in parallel.

17. The gas purifying system according to claim 13, further comprising,
a switching valve capable of switching and introducing a flow of a purification target gas to each of the gas purifying devices, when the gas purifying devices are arranged in parallel.

18. The gas purifying system according to claim 14, further comprising,
a switching valve capable of switching and introducing a flow of a purification target gas to each of the gas purifying devices, when the gas purifying devices are arranged in parallel.

19. A gas purifying method for a gas purifying device comprising a first electric field forming unit which forms an electric field for discharge in a gas channel in which a purification target gas flows to generate a discharge plasma, and charges and burns particulate matter included in the purification target gas by action of the discharge plasma, a second electric field forming unit which forms an electric field for dust collection to capture the charged particulate matter by an electrical dust collection function and draw out the discharge plasma to the gas channel side, and a control unit controlling the first electric field forming unit and the second electric field forming unit,
the method, comprising,

by the control unit, detecting information related to burning treatment of particulate matter in the first electric field forming unit, and controlling an operation state of the first electric field forming unit and/or the second electric field forming unit based on the detected information.

20. A gas purifying method for a plurality of gas purifying devices arranged in series or parallel and each comprising a first electric field forming unit which forms an electric field for discharge in a gas channel in which a purification target gas flows to generate a discharge plasma, and charges and burns particulate matter included in the purification target gas by action of the discharge plasma, a second electric field forming unit which forms an electric field for dust collection to capture the charged particulate matter by an electrical dust collection function and draw out the discharge plasma to the gas channel side, and a control unit controlling the first electric field forming unit and the second electric field forming unit,
the method, comprising,
by the control unit, detecting information related to burning treatment of particulate matter in the first electric field forming unit in each of the gas purifying devices, and controlling an operation state of the first electric field forming unit and/or the second electric field forming unit based on the detected information in each of the gas purifying devices.

21. The gas purifying method according to claim 19,
wherein the gas purifying device further comprises an additive gas supply unit which supplies an additive gas capable of generating oxidative radicals on an upstream side of the first electric field forming unit and the second electric field forming unit and a gas constituent detecting unit which detects gas constituents in a purification target gas,
the method, further comprising,
by the control unit, controlling the additive gas supply unit based on gas constituents detected by the gas constituent detecting unit to adjust a flow rate of an additive gas to be supplied into a purification target gas.

22. The gas purifying method according to claim 20,
wherein the gas purifying devices further comprise an additive gas supply unit which supplies an additive gas capable of generating oxidative radicals on an upstream side of the first electric field forming unit and the second electric field forming unit and a gas constituent detecting unit which detects gas constituents in a purification target gas,
the method, further comprising,
by the control unit, controlling the additive gas supply unit based on gas constituents detected by the gas constituent detecting unit to adjust a flow rate of an additive gas to be supplied into a purification target gas.

23. The gas purifying method according to claim 19,
wherein the information related to burning treatment of particulate matter includes at least one of gas constituent changes of the purification target gas at entrance and exit of the gas purifying device, pressure loss in the gas purifying device, temperature changes of the purification target gas at entrance and exit of the gas purifying device, and ratio of applied voltage to current in the first electric field forming unit or the second electric field forming unit.

24. The gas purifying method according to claim 20,
wherein the information related to burning treatment of particulate matter includes at least one of gas constituent changes of the purification target gas at entrance and exit of the gas purifying device, pressure loss in the gas purifyingdevice, temperature changes of the purification target gas at entrance and exit of the gas purifying device, and ratio of applied voltage to current in the first electric field forming unit or the second electric field forming unit.

# FIG. 1

# FIG. 2

# FIG. 3

# FIG. 4

# FIG. 5

# FIG. 6

# FIG. 7

# FIG. 8

# FIG. 9

24

10

EG

20

21

22

23

# FIG. 10

10

31

30

36

34

P

EG

50

31

32

33

51

51

61

61

60

# FIG. 11

# FIG. 12

# FIG. 13

# FIG. 14

**INTERNATIONAL SEARCH REPORT**

| International application No. |
|---|
| PCT/JP2007/001252 |

A. CLASSIFICATION OF SUBJECT MATTER
*F01N3/02*(2006.01)i, *B01D53/94*(2006.01)i, *B03C3/02*(2006.01)i, *B03C3/08* (2006.01)i, *B03C3/38*(2006.01)i, *B03C3/40*(2006.01)i, *B03C3/41*(2006.01)i, *F01N3/08*(2006.01)i, *F01N3/24*(2006.01)i
According to International Patent Classification (IPC) or to both national classification and IPC

B. FIELDS SEARCHED

Minimum documentation searched (classification system followed by classification symbols)
F01N3/02, B01D53/94, B03C3/02, B03C3/08, B03C3/38, B03C3/40, B03C3/41, F01N3/08, F01N3/24

Documentation searched other than minimum documentation to the extent that such documents are included in the fields searched
Jitsuyo Shinan Koho      1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-320895 A  (Toshiba Corp.), 17 November, 2005 (17.11.05), Full text; all drawings (Family: none) | 1-24 |
| Y | JP 2003-3824 A  (Toyota Central Research and Development Laboratories, Inc.), 08 January, 2003 (08.01.03), Par. Nos. [0046] to [0050]; Fig. 2 (Family: none) | 1-3,7-9, 11-18 |
| Y | JP 57-321 A  (Matsushita Electric Industrial Co., Ltd.), 05 January, 1982 (05.01.82), Full text; all drawings (Family: none) | 4-18,21,22 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 February, 2008 (08.02.08) | 19 February, 2008 (19.02.08) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
| --- |
| PCT/JP2007/001252 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2004-176703 A  (Toshiba Corp.),<br>24 June, 2004 (24.06.04),<br>Par. Nos. [0081] to [0086]; Fig. 11<br>& US 2004/112733 A1      & EP 1405663 A1 | 11-18,20,22,<br>24 |
| Y | JP 2006-97477 A  (Hino Motors, Ltd.),<br>13 April, 2006 (13.04.06),<br>Full text; all drawings<br>(Family: none) | 19-24 |
| A | JP 2003-301711 A  (Toyota Central Research and<br>Development Laboratories, Inc.),<br>24 October, 2003 (24.10.03),<br>Full text; all drawings<br>(Family: none) | 11-14 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11062558 A

- JP 2005320895 A